# EUROPEAN PATENT APPLICATION

(11) **EP 2 151 606 A1**
(43) Date of publication of application: **10.02.2010**
(21) Application number: 08827962.5
(22) Date of filing: 13.08.2008
(51) Int. Cl.: F16H 3/093

(54) **STEPPED AUTOMATIC TRANSMISSION, AND POWER UNIT AND VEHICLE WITH THE SAME**

(30) Priority: 21.08.2007 JP 2007214313; 08.08.2008 JP 2008204924
(71) Applicant: Yamaha Hatsudoki Kabushiki Kaisha, Iwata-shi, Shizuoka 438-8501 (JP)
(72) Inventor: OISHI, Akifumi, Iwata-shi Shizuoka 438-8501 (JP); MURAYAMA, Takuji, Iwata-shi Shizuoka 438-8501 (JP); HATA, Shinichiro, Iwata-shi Shizuoka 438-8501 (JP)
(74) Representative: Zimmermann, Tankred Klaus
(86) International application number: PCT/JP2008/064515
(87) International publication number: WO 2009/025219

(57) **Abstract**

[Task] To provide a stepped automatic transmission with a simple configuration which efficiently supplies oil to each rotation shaft and requires a small amount of oil.

[Means for Resolution] An output shaft 33 is disposed in rear of an input shaft 52. A first intermediate shaft 181 and second intermediate shafts 183 to 185 are arranged on a power transmission path between the input shaft 52 and the output shaft 33. An oil reservoir 99 is formed in a bottom portion of a casing 211. The first intermediate shaft 181 is provided with oil chambers 133 and 137 to which oil is supplied and one or a plurality of through-holes 66a and 70a. The through-holes 66a and 70a are connected to the oil chambers 133 and 137.

## Description

### [Technical Field]

The present invention relates to a stepped automatic transmission, a power unit having the same, and a vehicle.

### [Background Art]

In the past, a stepped automatic transmission is known. The stepped automatic transmission has higher energy transmission efficiency than that of, for example, a belt-type CVT (Continuously Variable Transmission). For this reason, in recent years, a demand for the stepped automatic transmission has been increased.

For example, Patent Document 1 discloses a three-speed stepped automatic transmission. FIG. 30 is a cross sectional view of a three-speed stepped automatic transmission 400 disclosed in Patent Document 1. As shown in FIG. 30, in the stepped automatic transmission 400, the left end portion of a crank shaft 401 is provided with a centrifugal start clutch (not shown) having a planetary gear. Additionally, a main shaft 402 is disposed in the rear-half portion of the stepped automatic transmission 400. A chain 403 is wound on the main shaft 402 and the crank shaft 401 in a suspended manner. A centrifugal high-speed clutch 404 is disposed in the main shaft 402. In the stepped automatic transmission 400, a two speed or a three speed is selected in terms of the centrifugal high-speed clutch 404.
[Patent Document 1] JP-UM-B-62-23349

### [Disclosure of the Invention]

### [Problem that the Invention is to Solve]

Incidentally, in the stepped automatic transmission 400 disclosed in Patent Document 1, a rotation shaft is disposed throughout a broad range in a longitudinal direction. For this reason, a problem arises in a method of supplying oil to each of a plurality of rotation shafts. Particularly, a problem arises in a method of supplying oil to a rotation shaft such as a main shaft 402 comparatively disposed in the rear part. As a method of supplying oil to the rotation shaft disposed in the rear part, for example, a method may be supposed that an oil reservoir extends to a position below the rear rotation shaft. However, when the oil reservoir extends to a position below the rear rotation shaft, a problem arises in that a large amount of oil is required.

Additionally, it may be supposed that an oil path is connected to each of the plurality of rotation shafts. However, in this case, many oil paths are required. Additionally, the oil paths become complex. Accordingly, a configuration of the stepped automatic transmission tends to be complex.

The present invention is contrived in consideration of the above-described problems, and an object of the invention is to provide a stepped automatic transmission with a simple configuration which efficiently supplies oil to each rotation shaft and requires a small amount of oil.

### [Means for Solving the Problem]

A stepped automatic transmission according to the invention includes an input shaft, an output shaft, a first intermediate shaft, a second intermediate shaft, a casing, and an oil supply mechanism. The output shaft is disposed in rear of the input shaft. The first intermediate shaft and the second intermediate shaft are disposed on a power transmission path between the input shaft and the output shaft. The casing accommodates the input shaft, the output shaft, the first intermediate shaft, and the second intermediate shaft. An oil reservoir is formed in a bottom portion of the casing. The oil supply mechanism supplies oil collected in the oil reservoir to the first intermediate shaft. The first intermediate shaft is provided with an oil chamber to which the oil is supplied and one or a plurality of through-holes. The through-holes are connected to the oil chamber.

A power unit according to the invention includes the stepped automatic transmission according to the invention.

A vehicle according to the invention includes the power unit according to the invention. [Advantage of the Invention]

According to the invention, it is possible to provide the stepped automatic transmission with a simple configuration which efficiently supplies oil to each rotation shaft and requires a small amount of oil.

### [Brief Description of the Drawings]

[FIG. 1] FIG. 1 is a left side view of a scooter type vehicle according to a first embodiment.
[FIG. 2] FIG. 2 is a cross sectional view of an engine unit according to the first embodiment.
[FIG. 3] FIG. 3 is a partial cross sectional view of the engine unit according to the first embodiment.
[FIG 4] FIG. 4 is a schematic diagram showing the structure of the engine unit according to the first embodiment.
[FIG. 5] FIG. 5 is a schematic partial cross sectional view illustrating the arrangement of rotation shafts of the engine unit according to the first embodiment.
[FIG. 6] FIG. 6 is a partial cross sectional view of the engine unit showing the structure of a group of clutches on the downstream side according to the first embodiment.
[FIG. 7] FIG. 7 is a conceptual diagram showing an oil circuit.
[FIG. 8] FIG. 8 is a partial cross sectional view of the engine unit illustrating an oil filter etc.
[FIG. 9] FIG. 9 is a schematic diagram illustrating a power transmission path in the first speed in a transmission.
[FIG. 10] FIG. 10 is a schematic diagram illustrating a power transmission path in the second speed in the transmission.
[FIG. 11] FIG. 11 is a schematic diagram illustrating a power transmission path in the third speed in the transmission.
[FIG. 12] FIG 12 is a schematic diagram illustrating a power transmission path in the fourth speed in the transmission.
[FIG. 13] FIG. 13 is a left side view of a moped according to a second embodiment.
[FIG. 14] FIG. 14 is a right side view of the moped according to the second embodiment.
[FIG. 15] FIG. 15 is a right side view of an engine unit according to the second embodiment.
[FIG. 16] FIG. 16 is a cross sectional view of the engine unit according to the second embodiment.
[FIG. 17] FIG. 17 is a partial cross sectional view of the engine unit according to the second embodiment.
[FIG. 18] FIG. 18 is a partial cross sectional view of the engine unit showing the structure of a group of clutches on the downstream side according to the second embodiment.
[FIG. 19] FIG. 19 is a schematic diagram showing the structure of an engine unit according to a first modified example.
[FIG. 20] FIG. 20 is a schematic diagram showing the structure of an engine unit according to a second modified example.
[FIG. 21] FIG. 21 is a schematic diagram showing the structure of an engine unit according to a third modified example.
[FIG. 22] FIG. 22 is a schematic diagram showing the structure of an engine unit according to a fourth modified example.
[FIG. 23] FIG. 23 is a schematic diagram showing the structure of an engine unit according to a fifth modified example.
[FIG. 24] FIG. 24 is a schematic diagram showing the structure of an engine unit according to a sixth modified example.
[FIG. 25] FIG. 25 is a left side view of a motorcycle according to a third embodiment.
[FIG. 26] FIG. 26 is a cross sectional view of the engine unit according to the third embodiment.
[FIG. 27] FIG. 27 is a schematic side view of the engine unit according to the third embodiment.
[FIG. 28] FIG. 28 is a schematic diagram showing a configuration of the engine unit according to the third embodiment.
[FIG. 29] FIG. 29 is a partial cross sectional view of the engine unit showing a configuration of a downstream clutch group according to the third embodiment.

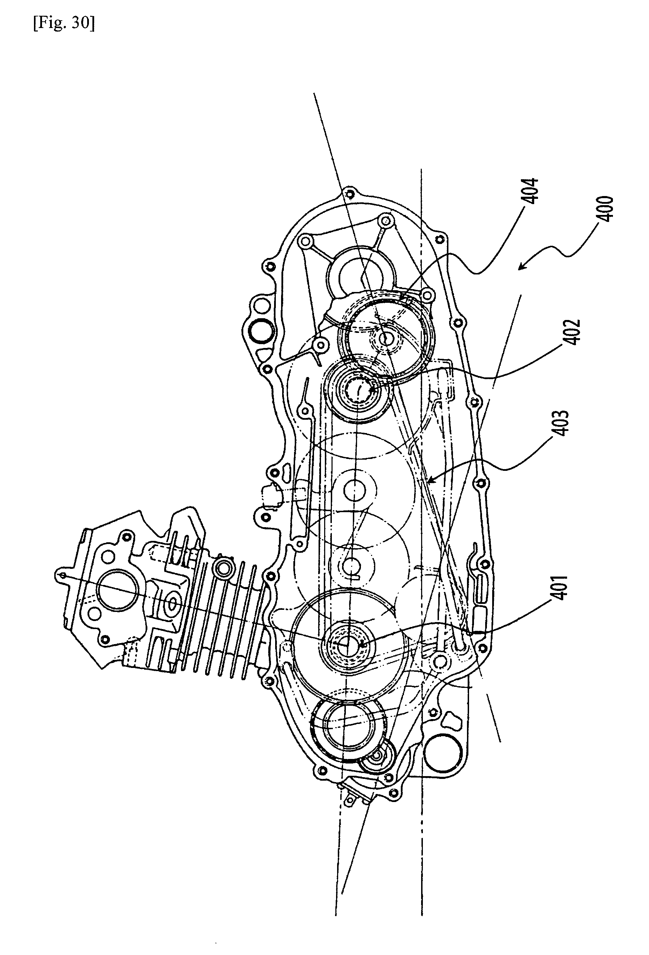

[FIG. 30] FIG. 30 is a cross sectional view of a three-speed stepped automatic transmission disclosed in Patent Document 1.

### [Description of Reference Numerals and Signs]

- 1:: SCOOTER TYPE VEHICLE (VEHICLE)
- 2:: MOPED (VEHICLE)
- 3:: MOTORCYCLE (VEHICEL)
- 20:: ENGINE UNIT (POWER UNIT)
- 31:: TRANSMISSION (STEPPED AUTOMATIC TRANSMISSION)
- 33:: OUTPUT SHAFT
- 52:: INPUT SHAFT
- 66:: FOURTH CLUTCH (CLUTCH)
- 66a, 70a:: LEAK HOLE (THROUGH-HOLE)
- 70:: THIRD CLUTCH (CLUTCH)
- 99:: OIL RESERVOIR
- 99a:: OIL SURFACE
- 133:: WORKING CHAMBER (OIL CHAMBER)
- 137:: WORKING CHAMBER (OIL CHAMBER)
- 140:: OIL PUMP (OIL SUPPLY MECHANISM)
- 180:: SHAFT BODY
- 181:: FIRST INTERMEDIATE SHAFT
- 182:: SECOND INTERMEDIATE SHAFT
- 183:: SECOND INTERMEDIATE SHAFT
- 184:: SECOND INTERMEDIATE SHAFT
- 211:: CASING
- 211a:: CONCAVE PORTION

### [Best Mode for Carrying Out the Invention]

### <<First Embodiment>>

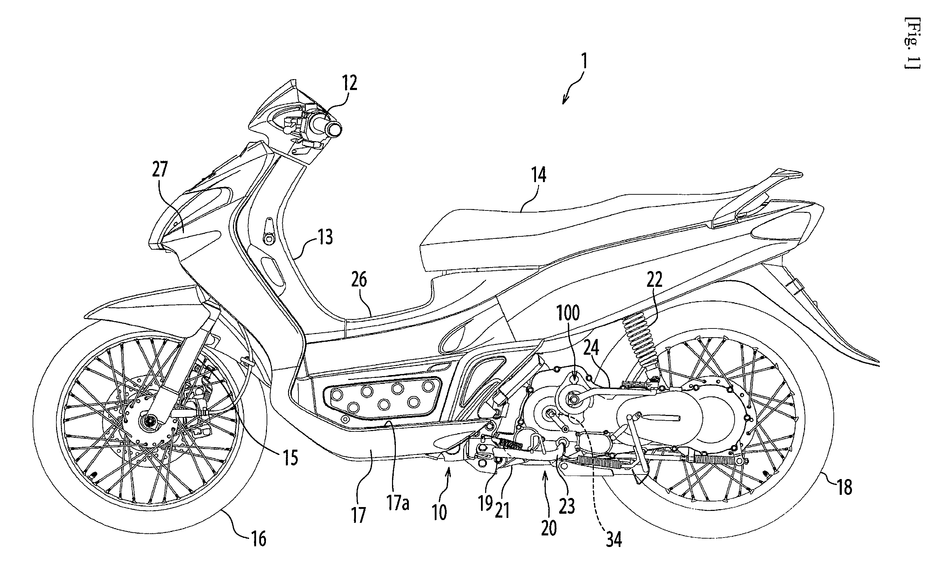

In a first embodiment, as an example of a motorcycle to which the invention is applied, a scooter type vehicle 1 shown in FIG. 1 is used to explain a preferred embodiment of the invention. Note that, in the invention, the "motorcycle" is not limited to a scooter type vehicle. The term "motorcycle" indicates a motorcycle defined in a broad sense. More specifically, in the specification, the term "motorcycle" indicates any vehicle that changes direction by banking the vehicle. At least one of the front wheel and the rear wheel may include a plurality of wheels. More specifically, the "motorcycle" may be a vehicle in which at least one of the front wheel and the rear wheel includes two wheels that are arranged adjacent to each other. Examples of the "motorcycle" include, at least, a motorcycle defined in a narrow sense, a scooter type vehicle, a moped type vehicle, and an off-road vehicle.

### (Schematic structure of the scooter type vehicle 1)

First, the schematic structure of the scooter type vehicle 1 will be explained with reference to FIG. 1. Note that the terms front and rear, and left and right as used in the following description indicate the front and rear and the left and right as viewed by a rider seated on a seat 14 of the scooter type vehicle 1.

The scooter type vehicle 1 includes a vehicle body frame 10. The vehicle body frame 10 includes a head pipe (not shown). The head pipe extends downward from the front part of the vehicle to the front side in a slightly inclined direction. A steering shaft (not shown) is rotatably inserted in the head pipe. The upper end portion of the steering shaft is provided with a handle 12. Meanwhile, the lower end portion of the steering shaft is connected to a front fork 15. The lower end portion of the front fork 15 is rotatably attached with a front wheel 16 as a driven wheel.

A body cover 13 is attached to the body frame 10. The body cover 13 covers a part of the body frame 10. The body cover 13 includes a leg shield 27. The leg shield 27 covers the front of the vehicle. Further, the body cover 13 is disposed to the rear of the leg shield 27, and includes foot rests 17 that are provided on the left and right sides of the vehicle. Foot rest surfaces 17a are formed on the foot rests 17. The rider's feet are placed on the foot rest surfaces 17a.

A center cover 26 that is a part of the body cover 13 is provided between the left and right foot rests 17. The center cover 26 protrudes upward from the foot rest surfaces 17a of the foot rests 17, and is formed in a tunnel shape extending in the front-rear direction. The seat 14 on which the rider sits is attached to a section of the body cover 13 located to the rear of the center cover 26. Further, a side stand 23 is attached to the body frame 10 substantially at the center of the vehicle.

An engine unit 20 is swingably suspended from the body frame 10. More specifically, the engine unit 20 is a swing unit type engine. An engine bracket 21 is integrally connected to the engine unit 20. The engine unit 20 is swingably attached to a pivot shaft 19 of the body frame 10 via the engine bracket 21. Further, one end of a cushion unit 22 is attached to the engine unit 20. The other end of the cushion unit 22 is attached to the rear of the body frame 10. The swinging movement of the engine unit 20 is suppressed by the cushion unit 22.

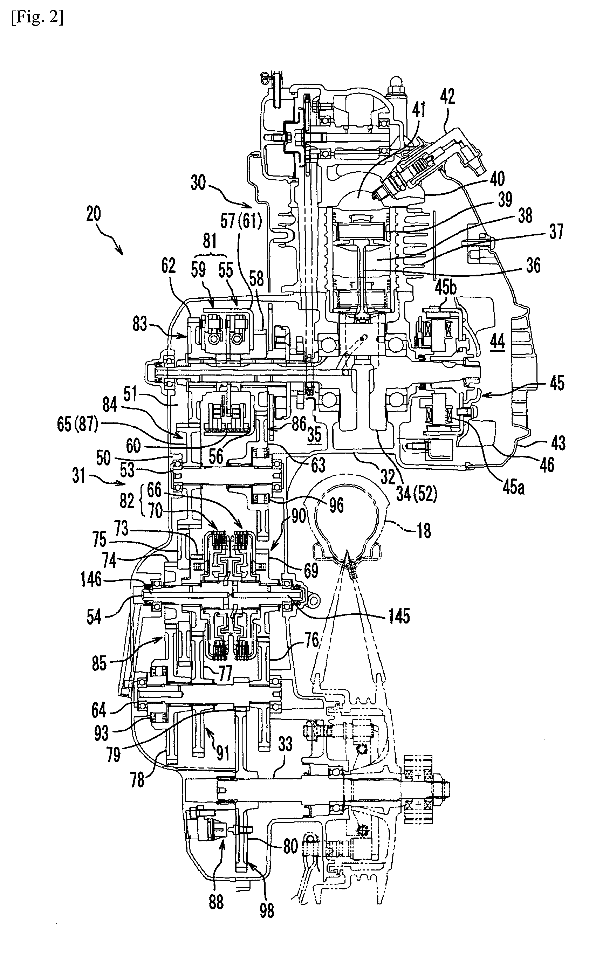

The engine unit 20 includes an output shaft 33 (refer to FIG. 2) that outputs power generated in the engine unit 20. A rear wheel 18 is attached to the output shaft 33. Accordingly, the rear wheel 18 is driven by the power generated in the engine unit 20. That is, the rear wheel 18 is a driving wheel in the first embodiment.

As shown in FIG. 2, in this embodiment, a vehicle speed sensor 88 is provided on the output shaft 33. More specifically, the vehicle speed sensor 88 is provided on a fourteenth gear 80 that rotates together with the output shaft 33. Note that the vehicle speed sensor 88 may be provided on a rotation shaft other than the output shaft 33, and may be provided on another member that rotates at a certain rotation speed ratio with respect to the output shaft 33.

### (Structure of the engine unit 20)

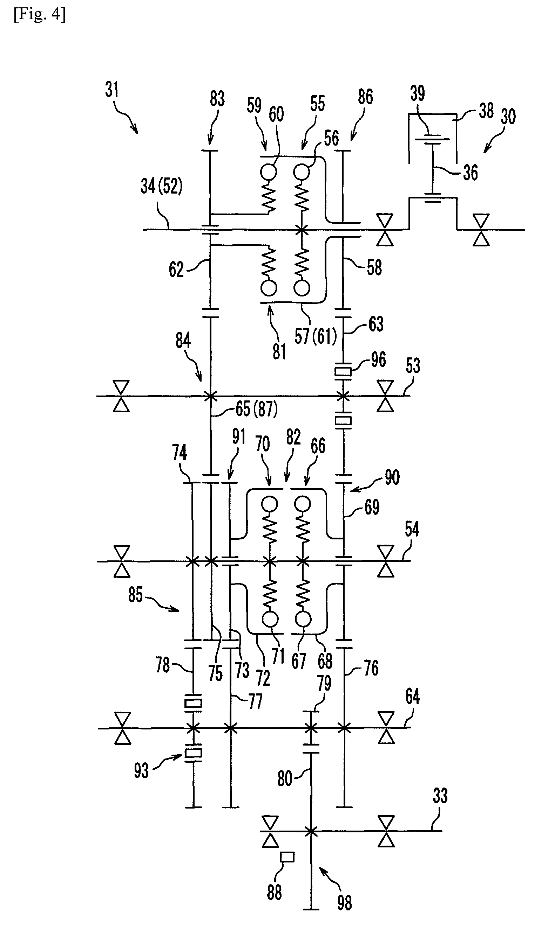

FIG. 2 is a cross sectional view of the engine unit 20. FIG. 4 is a schematic diagram showing the structure of the engine unit 20. As shown in FIG. 2, the engine unit 20 includes an engine 30 and a transmission 31. Note that, in the first embodiment, an example is described in which the engine 30 is a single cylinder engine. However, in the invention, the engine 30 is not limited to a single cylinder engine. The engine 30 may be a multi-cylinder engine, such as a two cylinder engine.

### - Engine 30 -

The engine 30 includes a crank case 32, a cylinder body 37, a cylinder head 40, and a crank shaft 34. A crank chamber 35 is formed within and defined by the crank case 32. A cylinder 38 that opens into the crank chamber 35 is formed within and defined by the cylinder body 37. The cylinder head 40 is attached to the upper end of the cylinder body 37. The crank shaft 34 that extends in the vehicle width direction is disposed in the crank chamber 35. A connecting rod 36 is attached to the crank shaft 34. A piston 39 disposed in the cylinder 38 is attached to the tip end of the connecting rod 36. A combustion chamber 41 is defined by the piston 39, the cylinder body 37, and the cylinder head 40. A spark plug 42 is attached to the cylinder head 40 such that an ignition section at the tip end of the spark plug 42 is located in the combustion chamber 41.

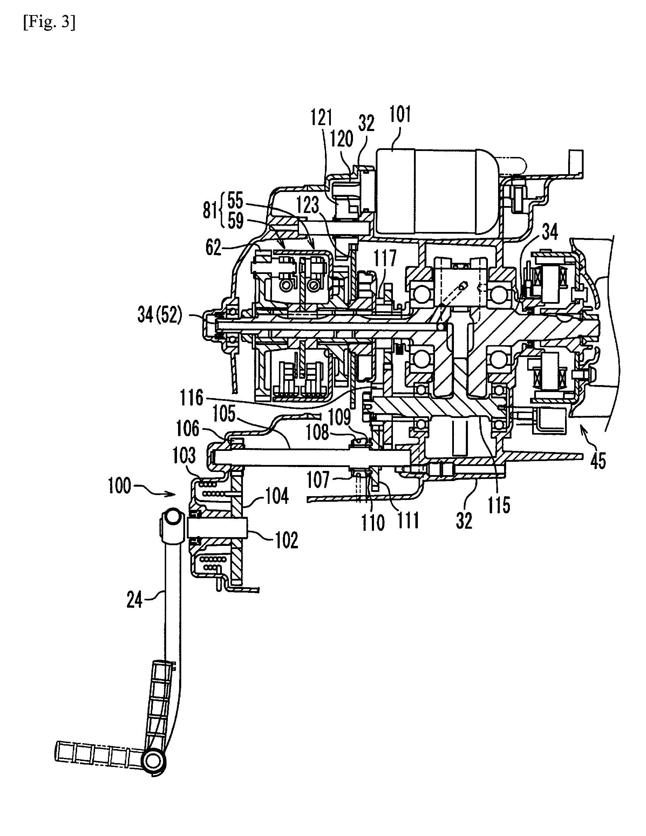

FIG. 3 is a partial cross sectional view of the engine unit 20, which shows a kick starter 100 and a starter 101. As shown in FIG. 1 and FIG. 3, the engine unit 20 is provided with the kick starter 100. The rider of the scooter type vehicle 1 operates the kick starter 100 to start the engine 30.

The kick starter 100 includes a kick pedal 24. As shown in FIG. 1, the kick pedal 24 is provided to the rear of and above the crank shaft 34, on the left side of the crank case 32. As shown in FIG. 3, the kick pedal 24 is attached to a kick shaft 102. A compression coil spring 103 is provided between the kick shaft 102 and the crank case 32. The compression coil spring 103 applies, to the kick shaft 102 rotated by the rider's operation, an urging force in a reverse rotating direction. Further, a gear 104 is provided on the kick shaft 102. Furthermore, a gear 106 is provided such that it cannot rotate with respect to a shaft 105. The gear 104 meshes with the gear 106. Rotation of the kick shaft 102 is transmitted to the crank shaft 34 by the gear 104 etc.

A ratchet 107 is formed on the shaft 105. A ratchet 108 is attached to a section of the shaft 105 where the ratchet 107 is formed. When the shaft 105 rotates, the ratchet 108 is guided by the ratchet 107, and moves to the right in the axial direction of the shaft 105. On the other hand, when the shaft 105 rotates in the reverse direction by the urging force of the compression coil spring 103, the ratchet 108 is guided by the ratchet 107, and moves to the left in the axial direction of the shaft 105.

An engagement section 109 is formed on the right end face of the ratchet 108. Moreover, an engagement section 110 is formed on the left end face of a gear 111 rotatably provided on the shaft 105. The engagement section 109 of the ratchet 108 engages with the engagement section 110 when the ratchet 108 moves to the right. Thus, when the ratchet 108 moves to the right, rotation of the shaft 105 is transmitted to the gear 111. The gear 111 meshes with a gear 116 formed on a balancer shaft 115. Further, the gear 116 meshes with a gear 117 formed on the crank shaft 34. Thus, rotation of the gear 111 is transmitted to the crank shaft 34 via the balancer shaft 115. Accordingly, when the kick pedal 24 is operated, the crank shaft 34 rotates and the engine 30 is started.

Note that, in a plan view, the kick shaft 102 extends toward the center of the vehicle such that it straddles the transmission 31. That is, as shown in FIG. 3, the kick shaft 102 extends from the left side in the vehicle width direction toward the center of the vehicle, and is disposed such that the kick shaft 102 is aligned with a section of the transmission 31 in the up-down direction.

In addition, the starter 101 is also provided in the engine 30. The starter 101 is attached to the crank case 32. The rotation of the starter 101 is transmitted to the crank shaft 34 via gears 120, 121, and 122. Thus, when the starter 101 is driven by the rider's operation, the engine 30 is started.

### - Generator 45 -

A generator cover 43 is attached to the right side of the crank case 32. A generator housing 44 is defined by the generator cover 43 and the crank case 32.

The right end of the crank shaft 34 protrudes from the crank chamber 35 and reaches the generator housing 44. In the generator housing 44, the generator 45 is attached to the right end of the crank shaft 34. The generator 45 includes an inner 45a and an outer 45b. The inner 45a is attached such that it cannot rotate with respect to the crank case 32. On the other hand, the outer 45b is attached to the right end of the crank shaft 34. The outer 45b rotates together with the crank shaft 34. Accordingly, when the crank shaft 34 rotates, the outer 45b rotates relatively to the inner 45a. Thus, power is generated. Note that a fan 46 is provided on the outer 45b. The fan 46 rotates together with the crank shaft 34, thereby cooling the engine 30.

A transmission cover 50 is attached to the left side of the crank case 32. The transmission cover 50 and the crank case 32 define a transmission housing 51 located on the left side of the crank case 32.

### - Structure of the transmission 31 -

Next, mainly referring to FIG. 4, the structure of the transmission 31 will be described in detail. The transmission 31 is a four-speed stepped automatic transmission that includes an input shaft 52 and the output shaft 33. The transmission 31 is a gear train stepped transmission in which power is transmitted from the input shaft 52 to the output shaft 33 via a plurality of pairs of shift gears.

As shown in FIG. 2, the left end of the crank shaft 34 protrudes from the crank chamber 35, and reaches the transmission housing 51. The crank shaft 34 also serves as the input shaft 52 of the transmission 31.

### - Structure of the rotation shafts -

The transmission 31 has a first rotation shaft 53, a second rotation shaft 54, a third rotation shaft 64, and the output shaft 33. The first rotation shaft 53, the second rotation shaft 54, the third rotation shaft 64, and the output shaft 33 are respectively provided in parallel with the input shaft 52.

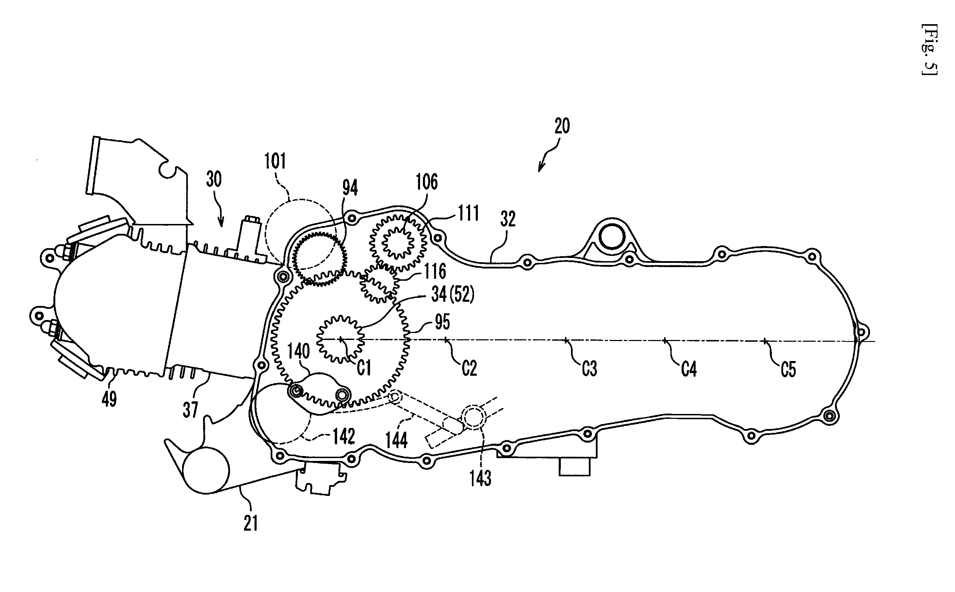

In FIG. 5, the reference numerals C1, C2, C3, C4, and C5 respectively represent the axis of the input shaft 52, the axis of the first rotation shaft 53, the axis of the second rotation shaft 54, the axis of the third rotation shaft 64, and the axis of the output shaft 33. As shown in FIG. 5, in a side view, the input shaft 52, the first rotation shaft 53, the second rotation shaft 54, the third rotation shaft 64, and the output shaft 33 are arranged in a generally horizontal direction orthogonal to the axial direction of the input shaft 52. More specifically, the axis C1 of the input shaft 52, the axis C2 of the first rotation shaft 53, the axis C3 of the second rotation shaft 54, the axis C4 of the third rotation shaft 64, and the axis C5 of the output shaft 33 are arranged in a generally horizontal line in a side view. By arranging the respective rotation shafts in this manner, the distance between the input shaft 52 and the output shaft 33 can be made relatively long. Note that, in FIG. 5, the reference numeral 94 denotes an idle gear. The reference numeral 95 denotes a one-way gear for the starter.

Note that, in the first embodiment, an example will be described in which the output shaft 33 and the third rotation shaft 64 are separately provided. However, the invention is not limited to this structure. The output shaft 33 and the third rotation shaft 64 may be the same shaft. In other words, the rear wheel 18 may be attached to the third rotation shaft 64.

### - A group of clutches 81 on the upstream side -

The input shaft 52 is provided with a group of clutches 81 on the upstream side. The group of clutches 81 on the upstream side includes a first clutch 55 and a second clutch 59. The first clutch 55 is disposed on the right side of the second clutch 59. The first clutch 55 and the second clutch 59 are centrifugal clutches. More specifically, in the first embodiment, the first clutch 55 and the second clutch 59 are drum type centrifugal clutches. However, the invention is not limited to this structure. The second clutch 59 may be a clutch other than a centrifugal clutch. For example, the second clutch 59 may be a hydraulic clutch.

The first clutch 55 includes an inner 56 as an input side clutch member, and an outer 57 as an output side clutch member. The inner 56 is provided such that it cannot rotate with respect to the input shaft 52. Accordingly, the inner 56 rotates together with the input shaft 52. On the other hand, the outer 57 can rotate with respect to the input shaft 52. When the rotation speed of the input shaft 52 becomes higher than a predetermined rotation speed, the inner 56 and the outer 57 come into contact due to centrifugal force acting on the inner 56. Thus, the first clutch 55 is engaged. Note that, when the inner 56 and the outer 57 are rotating in the engaged state, if the rotation speed thereof becomes lower than the predetermined rotation speed, the centrifugal force acting on the inner 56 is reduced. As a result, the inner 56 and the outer 57 separate. Thus, the first clutch 55 is disengaged.

The second clutch 59 includes an inner 60 as an output side clutch member, and an outer 61 as an input side clutch member. The inner 60 is provided such that it cannot rotate with respect to an eleventh gear 62 to be described later. When the input shaft 52 rotates, the rotation is transmitted to the inner 60 via a first pair of shift gears 86, the first rotation shaft 53, and a fourth pair of shift gears 83. Accordingly, the inner 60 rotates together with the rotation of the input shaft 52. The outer 61 can rotate with respect to the input shaft 52. When the rotation speed of the input shaft 52 becomes higher than a predetermined rotation speed, the inner 60 and the outer 61 come into contact due to centrifugal force acting on the inner 60. Thus, the second clutch 59 is engaged. Note that, when the inner 60 and the outer 61 are rotating in the engaged state, if the rotation speed thereof becomes lower than the predetermined rotation speed, the centrifugal force acting on the inner 60 is reduced. As a result, the inner 60 and the outer 61 separate. Thus, the second clutch 59 is disengaged.

Note that, in the first embodiment, the outer 57 and the outer 61 are formed by the same member. However, the invention is not limited to this structure. The outer 57 and the outer 61 may be formed by separate members.

The rotation speed of the input shaft 52 when the first clutch 55 is engaged, and the rotation speed of the input shaft 52 when the second clutch 59 is engaged are different from each other. In other words, the rotation speed of the inner 56 when the first clutch 55 is engaged, and the rotation speed of the inner 60 when the second clutch 59 is engaged are different from each other. More specifically, the rotation speed of the input shaft 52 when the first clutch 55 is engaged is lower than the rotation speed of the input shaft 52 when the second clutch 59 is engaged. To be even more specific, the first clutch 55 is engaged when the rotation speed of the input shaft 52 is equal to or higher than a first rotation speed. On the other hand, the first clutch 55 is disengaged when the rotation speed of the input shaft 52 is lower than the first rotation speed. The second clutch 59 is engaged when the rotation speed of the input shaft 52 is equal to or higher than a second rotation speed that is higher than the first rotation speed. On the other hand, the second clutch 59 is disengaged when the rotation speed of the input shaft 52 is lower than the second rotation speed.

A first gear 58 is provided on the outer 57 of the first clutch 55 such that it cannot rotate with respect to the outer 57. The first gear 58 rotates together with the outer 57 of the first clutch 55. On the other hand, a second gear 63 is provided on the first rotation shaft 53. The second gear 63 meshes with the first gear 58. The first gear 58 and the second gear 63 form the first pair of shift gears 86. In this embodiment, the first pair of shift gears 86 is a pair of first speed shift gears.

The second gear 63 is a one-way gear. More specifically, the second gear 63 transmits the rotation of the first gear 58 to the first rotation shaft 53. On the other hand, the second gear 63 does not transmit the rotation of the first rotation shaft 53 to the input shaft 52. That is, the second gear 63 also serves as a one-way rotation transmission mechanism 96.

The eleventh gear 62 is provided on the inner 60 that is an output side clutch member of the second clutch 59. The eleventh gear 62 rotates together with the inner 60. In addition, a twelfth gear 65 is provided on the first rotation shaft 53. The twelfth gear 65 meshes with the eleventh gear 62. The twelfth gear 65 and the eleventh gear 62 form the fourth pair of shift gears 83. The fourth pair of shift gears 83 has a gear ratio different from that of the first pair of shift gears 86. More specifically, the fourth pair of shift gears 83 has a gear ratio smaller than that of the first pair of shift gears 86. The fourth pair of shift gears 83 is a pair of second speed shift gears.

Between the first pair of shift gears 86 and the fourth pair of shift gears 83, the first clutch 55 and the second clutch 59 are located. In other words, the first clutch 55 and the second clutch 59 are disposed between the first pair of shift gears 86 and the fourth pair of shift gears 83.

In this embodiment, the twelfth gear 65 also functions as a ninth gear 87. In other words, the twelfth gear 65 and the ninth gear 87 are common. A tenth gear 75 is provided on the second rotation shaft 54 such that the tenth gear 75 cannot rotate with respect to the second rotation shaft 54. The tenth gear 75 rotates together with the second rotation shaft 54. The ninth gear 87 that also functions as the twelfth gear 65 meshes with the tenth gear 75. The ninth gear 87 that also functions as the twelfth gear 65 and the tenth gear 75 form a first pair of transmission gears 84.

A seventh gear 74 is provided on the second rotation shaft 54 such that it cannot rotate with respect to the second rotation shaft 54. The seventh gear 74 rotates together with the second rotation shaft 54. In addition, an eighth gear 78 is provided on the third rotation shaft 64 such that it cannot rotate with respect to the third rotation shaft 64. The third rotation shaft 64 rotates together with the eighth gear 78. The seventh gear 74 and the eighth gear 78 mesh with each other. The seventh gear 74 and the eighth gear 78 form a second pair of transmission gears 85.

The eighth gear 78 is a one-way gear. More specifically, the eighth gear 78 transmits the rotation of the second rotation shaft 54 to the third rotation shaft 64. On the other hand, the eighth gear 78 does not transmit the rotation of the third rotation shaft 64 to the second rotation shaft 54. That is, the eighth gear 78 also serves as a one-way rotation transmission mechanism 93.

Note that it is not essential in the invention for the eighth gear 78 to be a one-way gear. For example, a structure may be adopted in which the eighth gear 78 is a normal gear, and the seventh gear 74 is a one-way gear. In other words, the seventh gear 74 may also serve as a one-way rotation transmission mechanism. More specifically, a structure may be adopted in which the seventh gear 74 transmits the rotation of the second rotation shaft 54 to the eighth gear 78, but it does not transmit the rotation of the eighth gear 78 to the second rotation shaft 54.

### - A group of clutches 82 on the downstream side -

The second rotation shaft 54 is provided with a group of clutches 82 on the downstream side. The group of clutches 82 on the downstream side is located to the rear of the group of clutches 81 on the upstream side. As shown in FIG. 2, the group of clutches 82 on the downstream side and the group of clutches 81 on the upstream side are disposed at locations where they at least partially overlap in the axial direction of the input shaft 52. In other words, the group of clutches 82 on the downstream side and the group of clutches 81 on the upstream side are disposed at locations where they at least partially overlap in the vehicle width direction. In more detail, the group of clutches 82 on the downstream side and the group of clutches 81 on the upstream side are disposed at locations where they substantially overlap in the vehicle width direction.

The group of clutches 82 on the downstream side includes a third clutch 70 and a fourth clutch 66. The fourth clutch 66 is disposed on the right side of the third clutch 70. Therefore, the direction in which the first clutch 55 is located with respect to the second clutch 59 is the same as the direction in which the fourth clutch 66 is located with respect to the third clutch 70. As shown in FIG. 2, the first clutch 55 and the fourth clutch 66 are disposed so that they at least partially overlap in the vehicle width direction. In other words, the first clutch 55 and the fourth clutch 66 are disposed so that they at least partially overlap in the axial direction of the input shaft 52. Also, the second clutch 59 and the third clutch 70 are disposed so that they at least partially overlap in the vehicle width direction. In other words, the second clutch 59 and the third clutch 70 are disposed so that they at least partially overlap in the axial direction of the input shaft 52. Specifically, the first clutch 55 and the fourth clutch 66 are disposed so that they substantially overlap in the vehicle width direction. Also, the second clutch 59 and the third clutch 70 are disposed so that they substantially overlap in the vehicle width direction.

In this embodiment, the third clutch 70 and the fourth clutch 66 are hydraulic clutches. More specifically, in the first embodiment, the third clutch 70 and the fourth clutch 66 are disc type hydraulic clutches. However, the invention is not limited to this structure. The fourth clutch 66 and the third clutch 70 may be clutches other than hydraulic clutches. For example, the fourth clutch 66 and the third clutch 70 may be centrifugal clutches. However, it is preferable that the fourth clutch 66 and the third clutch 70 are hydraulic clutches.

As described above, in the invention, the first clutch 55 is a centrifugal clutch, and at least one of the second clutch 59, the third clutch 70 and the fourth clutch 66 may be a hydraulic clutch. As long as this condition is met, the second clutch 59, the third clutch 70 and the fourth clutch 66 may be drum type or disc type centrifugal clutches, or may be drum type or disc type hydraulic clutches. However, it is desirable for two or more of the second clutch 59, the third clutch 70 and the fourth clutch 66 to be hydraulic clutches. In particular, it is desirable for the second clutch 59 to be a centrifugal clutch and for the third clutch 70 and the fourth clutch 66 to be hydraulic clutches. Then, it is desirable for the third clutch 70 and the fourth clutch 66 that are hydraulic clutches to be disposed on the same rotation shaft and for the first clutch 55 and the second clutch 59 that are centrifugal clutches to be disposed on a separate rotation shaft.

In the invention, the term "centrifugal clutch" refers to a clutch that has an input side clutch member and an output side clutch member, where, when the rotation speed of the input side clutch member is equal to or higher than a predetermined rotation speed, the input side clutch member and the output side clutch member are engaged and joined, and when the rotation speed of the input side clutch member is lower than the predetermined rotation speed, the input side clutch member and the output side clutch member separate and are disengaged.

The rotation speed of the second rotation shaft 54 when the third clutch 70 is engaged, and the rotation speed of the second rotation shaft 54 when the fourth clutch 66 is engaged are different from each other. In other words, the rotation speed of the inner 71 when the third clutch 70 is engaged, and the rotation speed of the inner 67 when the fourth clutch 66 is engaged are different from each other. More specifically, the rotation speed of the second rotation shaft 54 when the third clutch 70 is engaged is lower than the rotation speed of the second rotation shaft 54 when the fourth clutch 66 is engaged.

The third clutch 70 is provided with the inner 71 as an input side clutch member, and an outer 72 as an output side clutch member. The inner 71 is provided such that it cannot rotate with respect to the second rotation shaft 54. Accordingly, the inner 71 rotates together with the rotation of the second rotation shaft 54. On the other hand, the outer 72 can rotate with respect to the second rotation shaft 54. In a state where the third clutch 70 is disengaged, when the second rotation shaft 54 rotates, the inner 71 rotates together with the second rotation shaft 54, but the outer 72 does not rotate together with the second rotation shaft 54. In a state where the third clutch 70 is engaged, both the inner 71 and the outer 72 rotate together with the second rotation shaft 54.

A fifth gear 73 is attached to the outer 72 that is an output side clutch member of the third clutch 70. The fifth gear 73 rotates together with the outer 72. In addition, a sixth gear 77 is provided on the third rotation shaft 64 such that it cannot rotate with respect to the third rotation shaft 64. The sixth gear 77 rotates together with the third rotation shaft 64. The fifth gear 73 and the sixth gear 77 mesh with each other. Therefore, the rotation of the outer 72 is transmitted to the third rotation shaft 64 via the fifth gear 73 and the sixth gear 77.

The fifth gear 73 and the sixth gear 77 form a third pair of shift gears 91. The third pair of shift gears 91 has a gear ratio that is different from the ratios of the first pair of shift gears 86, the fourth pair of shift gears 83, and a second pair of shift gears 90.

The third pair of shift gears 91 is located with respect to the third clutch 70 on the same side on which the fourth pair of shift gears 83 is located with respect to the second clutch 59. More specifically, the third pair of shift gears 91 is located on the left side of the third clutch 70. In a similar manner, the fourth pair of shift gears 83 is located on the left side of the second clutch 59.

Further, the third pair of shift gears 91 and the fourth pair of shift gears 83 are disposed so that they at least partially overlap with each other in the vehicle width direction. In other words, the third pair of shift gears 91 and the fourth pair of shift gears 83 are disposed so that they at least partially overlap with each other in the axial direction of the input shaft 52. More specifically, the third pair of shift gears 91 and the fourth pair of shift gears 83 are disposed so that they substantially overlap in the vehicle width direction.

The fourth clutch 66 is provided with the inner 67 as an input side clutch member and an outer 68 as an output side clutch member. The inner 67 is provided such that it cannot rotate with respect to the second rotation shaft 54. Accordingly, the inner 67 rotates together with the rotation of the second rotation shaft 54. On the other hand, the outer 68 can rotate with respect to the second rotation shaft 54. In a state where the fourth clutch 66 is disengaged, when the second rotation shaft 54 rotates, the inner 67 rotates together with the second rotation shaft 54, but the outer 68 does not rotate together with the second rotation shaft 54. In a state where the fourth clutch 66 is engaged, both the inner 67 and the outer 68 rotate together with the second rotation shaft 54.

A third gear 69 is attached to the outer 68 that is an output side clutch member of the fourth clutch 66. The third gear 69 rotates together with the outer 68. In addition, a fourth gear 76 is provided on the third rotation shaft 64 such that it cannot rotate with respect to the third rotation shaft 64. The fourth gear 76 rotates together with the third rotation shaft 64. The third gear 69 and the fourth gear 76 mesh with each other. Therefore, the rotation of the outer 68 is transmitted to the third rotation shaft 64 via the third gear 69 and the fourth gear 76.

The fourth gear 76 and the third gear 69 form the second pair of shift gears 90. The second pair of shift gears 90 has a gear ratio that is different from the ratios of the first pair of shift gears 86 and the fourth pair of shift gears 83.

Between the third pair of shift gears 91 and the second pair of shift gears 90, the third clutch 70 and the fourth clutch 66 are located. In other words, the third clutch 70 and the fourth clutch 66 are disposed between the third pair of shift gears 91 and the second pair of shift gears 90.

The second pair of shift gears 90 is located with respect to the fourth clutch 66 on the same side on which the first pair of shift gears 86 is located with respect to the first clutch 55. More specifically, the second pair of shift gears 90 is located on the right side of the fourth clutch 66. In a similar manner, the first pair of shift gears 86 is located on the right side of the first clutch 55.

Further, the second pair of shift gears 90 and the first pair of shift gears 86 are disposed so that they at least partially overlap with each other in the vehicle width direction. In other words, the second pair of shift gears 90 and the first pair of shift gears 86 are disposed so that they at least partially overlap with each other in the axial direction of the input shaft 52. More specifically, the second pair of shift gears 90 and the first pair of shift gears 86 are disposed so that they substantially overlap in the vehicle width direction.

A thirteenth gear 79 is provided on the third rotation shaft 64 such that it cannot rotate with respect to the third rotation shaft 64. The thirteenth gear 79 is disposed on the left side of the fourth gear 76 and the sixth gear 77, in the vehicle width direction. The thirteenth gear 79 rotates together with the third rotation shaft 64. Furthermore, the fourteenth gear 80 is provided on the output shaft 33 such that it cannot rotate with respect to the output shaft 33. In other words, the fourteenth gear 80 rotates together with the output shaft 33. The fourteenth gear 80 and the thirteenth gear 79 form a third pair of transmission gears 98. The third pair of transmission gears 98 transmits the rotation of the third rotation shaft 64 to the output shaft 33.

### - Detailed structure of the group of clutches 82 on the downstream side -

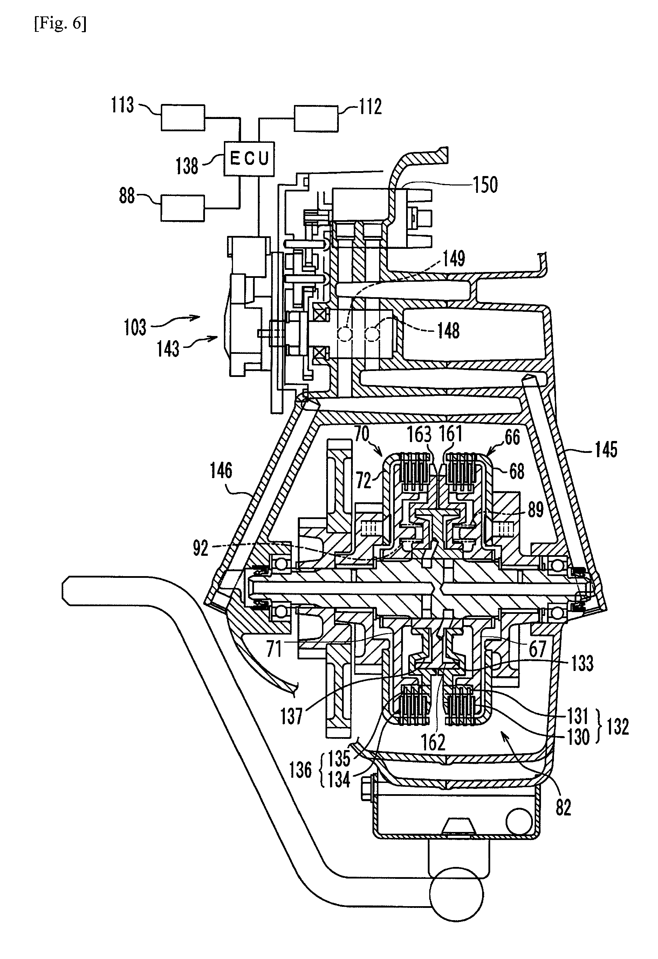

Next, with reference to FIG. 6 to FIG. 8, the group of clutches 82 on the downstream side will be described in further detail.

The third clutch 70 is provided with a plate group 136. The plate group 136 includes a plurality of friction plates 134 and a plurality of clutch plates 135. The plurality of friction plates 134 and the plurality of clutch plates 135 are alternately laminated in the vehicle width direction. The friction plates 134 are unrotatable with respect to the outer 72. On the other hand, the clutch plates 135 are unrotatable with respect to the inner 71.

The inner 71 is unrotatable with respect to the outer 72. A pressure plate 163 is disposed on the side of the inner 71 opposite to the outer 72 in the vehicle width direction. The pressure plate 163 is urged rightward in the vehicle width direction by a compression coil spring 92. That is, the pressure plate 163 is urged to a boss portion 162 by the compression coil spring 92.

A working chamber 137 is defined between the boss portion 162 and the pressure plate 163. The working chamber 137 is filled with oil. When a hydraulic pressure within the working chamber 137 increases, the pressure plate 163 is displaced in a direction away from the boss portion 162. Accordingly, a distance between the pressure plate 163 and the inner 71 becomes short. Accordingly, the plates group 136 becomes in a press-contact state. As a result, the inner 71 and the outer 72 rotate together, thereby allowing the third clutch 70 to be in an engagement state.

On the other hand, when the pressure within the working chamber 137 decreases, the pressure plate 163 is displaced to the boss portion 162 by the compression coil spring 92. Accordingly, the press-contact state of the plate group 136 is released. As a result, the inner 71 and the outer 72 are relatively rotatable with respect to each other, and the third clutch 70 is disengaged.

Although not shown in the figures, a tiny leak hole that communicates with the working chamber 137 is formed in the third clutch 70. Further, a gap between the inner 71 and the outer 72 is not sealed. Thus, the oil in the working chamber 137 can be rapidly discharged when the clutch 70 is disengaged. Therefore, according to the embodiment, the response of the clutch 70 can be improved. In addition, according to the embodiment, the oil scattering from the leak hole or the gap between the inner 71 and the outer 72 can be used to lubricate other sliding sections effectively.

The fourth clutch 66 is provided with a plate group 132. The plate group 132 includes a plurality of friction plates 130 and a plurality of clutch plates 131. The plurality of friction plates 130 and the plurality of clutch plates 131 are alternately laminated in the vehicle width direction. The friction plates 130 are unrotatable with respect to the outer 68. Meanwhile, the clutch plates 131 are unrotatable with respect to the inner 67.

The inner 67 is rotatable with respect to the outer 68 and is displaceable in the vehicle width direction. A pressure plate 161 is disposed on the side of the inner 67 opposite to the outer 68 in the vehicle width direction. The pressure plate 161 is urged leftward in the vehicle width direction by a compression coil spring 89. That is, the pressure plate 161 is urged to the boss portion 162 by the compression coil spring 89.

A working chamber 133 is defined between the boss portion 162 and the pressure plate 161. The working chamber 133 is filled with oil. When the hydraulic pressure within the working chamber 133 increases, the pressure plate 161 is displaced in a direction away from the boss portion 162. Accordingly, a distance between the pressure plate 161 and the inner 67 becomes short. Accordingly, the plate group 132 becomes in a pressure-contact state. As a result, the inner 67 and the outer 68 rotate together, and the fourth clutch 66 becomes in an engagement state.

On the other hand, when the pressure within the working chamber 133 decreases, the pressure plate 161 is displaced to the boss portion 162 by the compression coil spring 89. Accordingly, the press-contact state of the plate group 132 is released. As a result, the inner 67 and the outer 68 are relatively rotatable with respect to each other, and the fourth clutch 66 is disengaged.

Although not shown in the figures, a tiny leak hole that communicates with the working chamber 133 is formed in the fourth clutch 66. Further, a gap between the inner 67 and the outer 68 is not sealed. Thus, the oil in the working chamber 133 can be rapidly discharged when the clutch 66 is disengaged. Therefore, according to the embodiment, the response of the clutch 66 can be improved. In addition, according to the embodiment, the oil scattering from the leak hole or the gap between the inner 67 and the outer 68 can be used to lubricate other sliding sections effectively.

### - Oil path 139 -

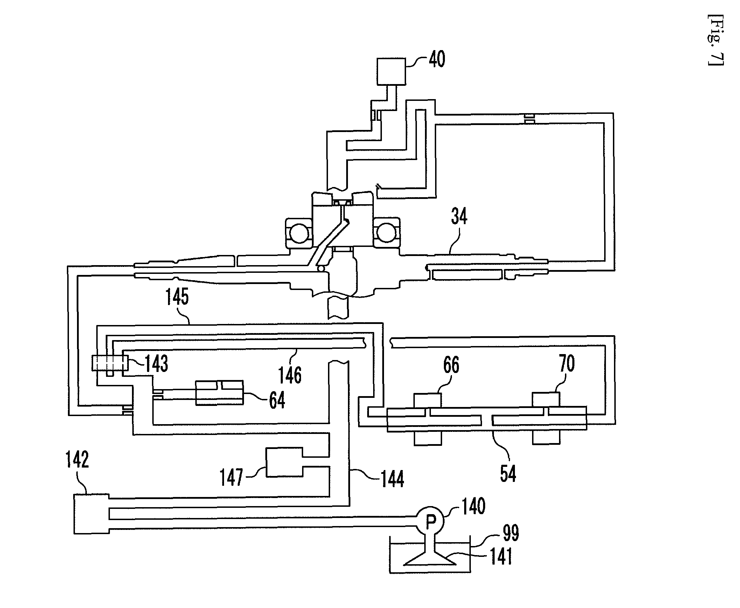

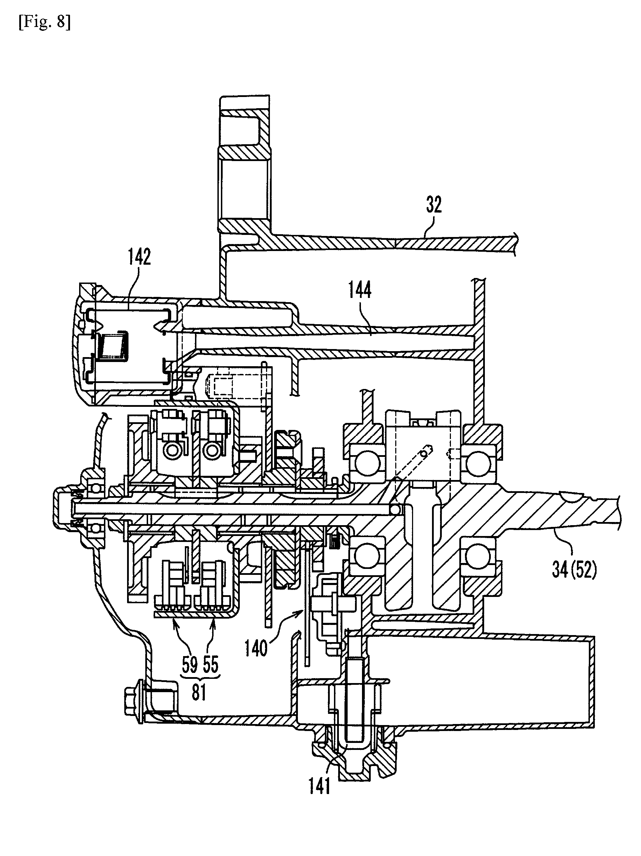

As shown in FIG. 7, an oil pump 140 applies and regulates the pressure in the working chamber 133 of the fourth clutch 66 and the pressure in the working chamber 137 of the third clutch 70. As shown in FIG. 7, an oil reservoir 99 is formed at the bottom of the crank chamber 35. A strainer 141, which is also shown in FIG. 8, is immersed in the oil reservoir 99. The strainer 141 is connected to the oil pump 140. When the oil pump 140 is driven, the oil accumulated in the oil reservoir 99 is pumped up via the strainer 141.

A relief valve 147 is provided in the middle of a first oil path 144. The pumped oil is purified by an oil cleaner 142, and is regulated to a predetermined pressure by the relief valve 147. After that, a part of the purified oil is supplied to the crank shaft 34 and to a sliding section in the cylinder head 40. Further, a part of the purified oil is also supplied to the working chamber 133 of the fourth clutch 66 and the working chamber 137 of the third clutch 70. More specifically, a second oil path 145 and a third oil path 146 are connected to the first oil path 144 that extends from the oil cleaner 142. The second oil path 145 extends from a valve 143, and passes on the crank case 32 side. Then, from the right end of the second rotation shaft 54, it extends through the inside of the second rotation shaft 54. Then, the second oil path 145 reaches the working chamber 133. Accordingly, the oil is supplied to the working chamber 133 via the second oil path 145, and the pressure in the working chamber 133 is regulated. On the other hand, the third oil path 146 extends from the valve 143 and passes on the transmission cover 50 side. Then, from the left end of the second rotation shaft 54, it extends through the inside of the second rotation shaft 54. Then, the third oil path 146 reaches the working chamber 137. Accordingly, the oil is supplied to the working chamber 137 via the third oil path 146.

The valve 143 is provided at the connecting section of the first oil path 144, the second oil path 145, and the third oil path 146. The valve 143 opens and closes between the first oil path 144 and the third oil path 146, and between the first oil path 144 and the second oil path 145.

As shown in FIG. 6, a motor 150 that drives the valve 143 is attached to the valve 143. The motor 150 drives the valve 143, whereby the third clutch 70 and the fourth clutch 66 are engaged/disengaged. That is, in this embodiment, the oil pump 140, the valve 143, and the motor 150 form an actuator 103 that applies hydraulic pressure to the third clutch 70 and the fourth clutch 66 that are hydraulic clutches. The actuator 103 is controlled by an ECU 138 shown in FIG. 6, and used to turn the third clutch 70 and the fourth clutch 66 ON/OFF. More specifically, the actuator 103 applies hydraulic pressure to the working chamber 133 and the working chamber 137 as necessary, thus engaging/disengaging the third clutch 70 and the fourth clutch 66.

To be more specific, as shown in FIG. 6, a throttle opening degree sensor 112 and the vehicle speed sensor 88 are connected to the ECU 138. The ECU 138 serving as a control portion controls the actuator 103 based on at least one of the throttle opening degree detected by the throttle opening degree sensor 112 and the vehicle speed detected by the vehicle speed sensor 88. By controlling the actuator 103 in this way, the ECU 138 controls the timing at which the third clutch 70 and the fourth clutch 66 are engaged. In this embodiment, the ECU 138 serving as the control portion controls the actuator 103 based on both the throttle opening degree detected by the throttle opening degree sensor 112 and the vehicle speed detected by the vehicle speed sensor 88. More specifically, the ECU 138 controls the actuator 103 based on information that is obtained by applying the throttle opening degree output from the throttle opening degree sensor 112 and the vehicle speed output from the vehicle speed sensor 88 to a V-N diagram read from a memory 113.

Specifically, the valve 143 is formed in a generally cylindrical shape. An internal path 148 for connecting the first oil path 144 and the second oil path 145, and an internal path 149 for connecting the first oil path 144 and the third oil path 146 are formed in the valve 143. The internal paths 148 and 149 are designed to select one of the following positions when the valve 143 is rotated by the motor 150: a position where the first oil path 144 and the second oil path 145 are connected, while the first oil path 144 and the third oil path 146 are disconnected; a position where the first oil path 144 and the third oil path 146 are connected, while the first oil path 144 and the second oil path 145 are disconnected; and a position where the first oil path 144 and the third oil path 146 are disconnected, and the first oil path 144 and the second oil path 145 are also disconnected. Thus, one of the following states is selected: a state where both the fourth clutch 66 and the third clutch 70 are disengaged; a state where the fourth clutch 66 is engaged, while the third clutch 70 is disengaged; and a state where the fourth clutch 66 is disengaged, while the third clutch 70 is engaged.

### - Operation of the transmission 31 -

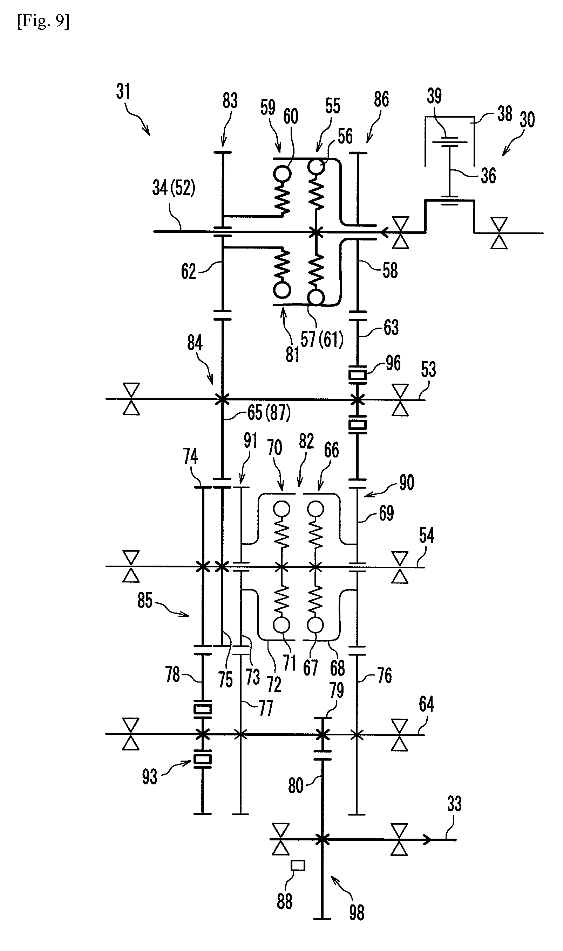

Next, the operation of the transmission 31 will be described in detail with reference to FIG. 9 to FIG. 12.

### - First speed when starting from standstill -

First, when the engine 30 is started, the crank shaft 34 (i.e., the input shaft 52) starts to rotate. The inner 56 of the first clutch 55 rotates together with the input shaft 52. Therefore, when the rotation speed of the input shaft 52 becomes equal to or higher than a predetermined rotation speed (i.e., the first rotation speed), and a centrifugal force equal to or larger than a predetermined magnitude is applied to the inner 56, the first clutch 55 is engaged as shown in FIG. 9. When the first clutch 55 is engaged, the first pair of shift gears 86 rotates together with the outer 57 of the first clutch 55. Thus, the rotation of the input shaft 52 is transmitted to the first rotation shaft 53.

The ninth gear 87 rotates together with the first rotation shaft 53. Accordingly, the first pair of transmission gears 84 also rotates along with the rotation of the first rotation shaft 53. Thus, the rotation of the first rotation shaft 53 is transmitted to the second rotation shaft 54 via the first pair of transmission gears 84.

The seventh gear 74 rotates together with the second rotation shaft 54. Accordingly, the second pair of transmission gears 85 also rotates along with the rotation of the second rotation shaft 54. Thus, the rotation of the second rotation shaft 54 is transmitted to the third rotation shaft 64 via the second pair of transmission gears 85.

The thirteenth gear 79 rotates together with the third rotation shaft 64. Accordingly, the third pair of transmission gears 98 also rotates along with the rotation of the third rotation shaft 64. Thus, the rotation of the third rotation shaft 64 is transmitted to the output shaft 33 via the third pair of transmission gears 98.

In this manner, when the scooter type vehicle 1 is started from standstill, that is, in the first speed, rotation is transmitted from the input shaft 52 to the output shaft 33 via the first clutch 55, the first pair of shift gears 86, the first pair of transmission gears 84, the second pair of transmission gears 85, and the third pair of transmission gears 98, as shown in FIG. 9.

### - Second speed -

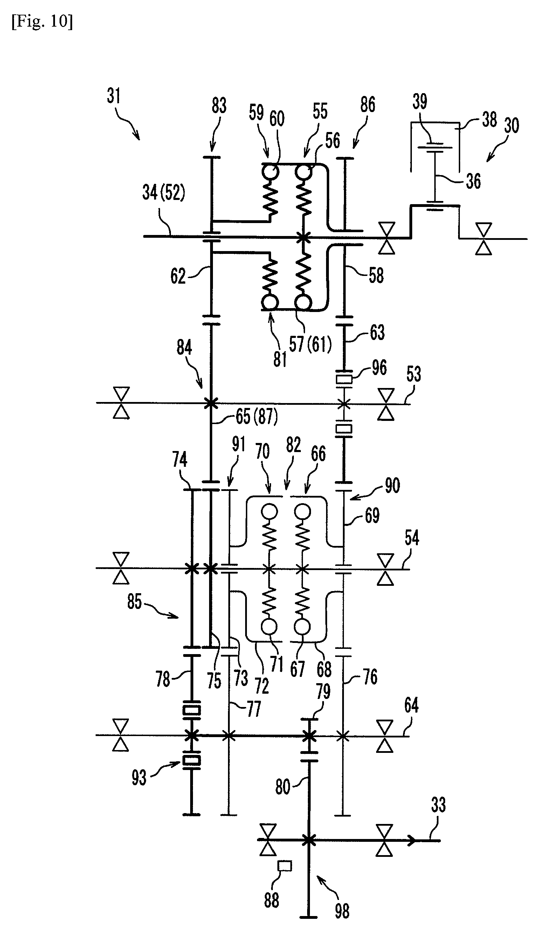

In the first speed, the twelfth gear 65 common with the ninth gear 87 rotates together with the first rotation shaft 53. Therefore, the eleventh gear 62 meshing with the twelfth gear 65 and the inner 60 of the second clutch 59 also rotate together. Accordingly, as the rotation speed of the input shaft 52 increases, the rotation speed of the inner 60 of the second clutch 59 also increases. When the rotation speed of the input shaft 52 becomes equal to or higher than the second rotation speed that is higher than the first rotation speed, the rotation speed of the inner 60 also increases accordingly, and the second clutch 59 is engaged as shown in FIG. 10.

Note that, in this embodiment, the gear ratio of the fourth pair of shift gears 83 is smaller than the gear ratio of the first pair of shift gears 86. As a result, the rotation speed of the twelfth gear 65 is higher than the rotation speed of the second gear 63. Accordingly, rotation is transmitted from the input shaft 52 to the first rotation shaft 53 via the fourth pair of shift gears 83. On the other hand, the rotation of the first rotation shaft 53 is not transmitted to the input shaft 52 by the one-way rotation transmission mechanism 96.

The rotation force is transmitted from the first rotation shaft 53 to the output shaft 33, in the same manner as in the first speed, via the first pair of transmission gears 84, the second pair of transmission gears 85, and the third pair of transmission gears 98.

In this manner, in the second speed, rotation is transmitted from the input shaft 52 to the output shaft 33 via the second clutch 59, the fourth pair of shift gears 83, the first pair of transmission gears 84, the second pair of transmission gears 85, and the third pair of transmission gears 98, as shown in FIG. 10.

### - Third speed -

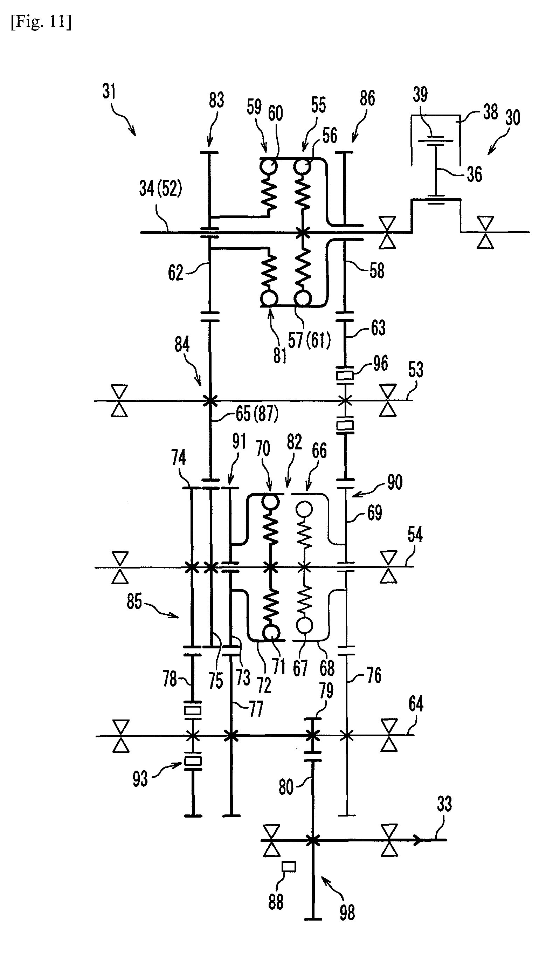

In the second speed, when the rotation speed of the crank shaft 34 (i.e., the input shaft 52) becomes higher than the second rotation speed, and the vehicle speed becomes equal to or higher than a predetermined vehicle speed, the valve 143 is driven and the third clutch 70 is engaged, as shown in FIG. 11. As a result, the third pair of shift gears 91 starts to rotate. Note that the gear ratio of the third pair of shift gears 91 is smaller than the gear ratio of the second pair of transmission gears 85. Therefore, the rotation speed of the sixth gear 77 of the third pair of shift gears 91 becomes higher than the rotation speed of the eighth gear 78 of the second pair of transmission gears 85. Thus, the rotation of the second rotation shaft 54 is transmitted to the third rotation shaft 64 via the third pair of shift gears 91. On the other hand, the rotation of the third rotation shaft 64 is not transmitted to the second rotation shaft 54 by the one-way rotation transmission mechanism 93.

The rotation of the third rotation shaft 64 is transmitted to the output shaft 33 via the third pair of transmission gears 98, in the same manner as in the first speed and the second speed.

In this manner, in the third speed, rotation is transmitted from the input shaft 52 to the output shaft 33 via the second clutch 59, the fourth pair of shift gears 83, the first pair of transmission gears 84, the third clutch 70, the third pair of shift gears 91, and the third pair of transmission gears 98, as shown in FIG. 11.

### - Fourth speed -

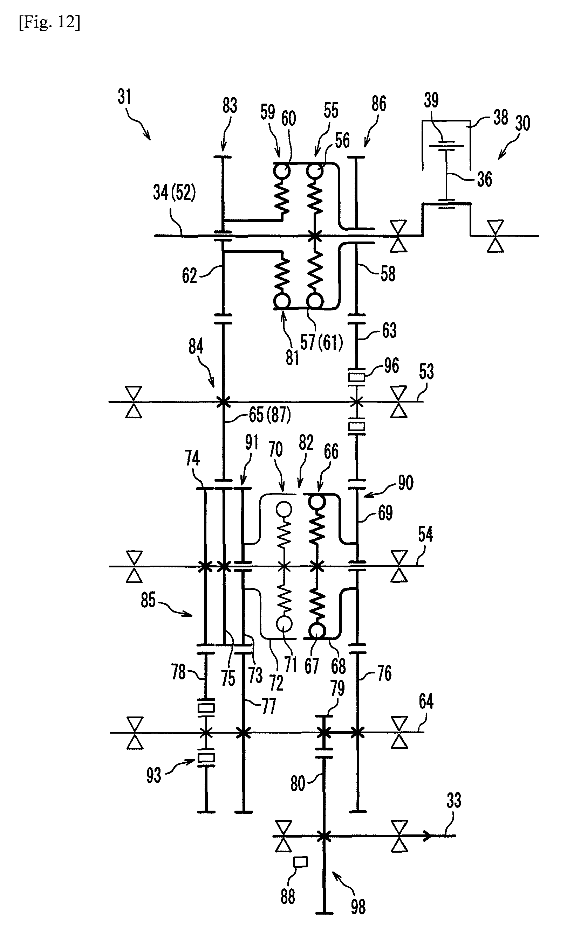

In the third speed, when the rotation speed of the crank shaft 34 (i.e., the input shaft 52) further increases and the vehicle speed further increases as well, the valve 143 is driven and the fourth clutch 66 is engaged as shown in FIG. 12. On the other hand, the third clutch 70 is disengaged. As a result, the second pair of shift gears 90 starts to rotate. Note that the gear ratio of the second pair of shift gears 90 is also smaller than the gear ratio of the second pair of transmission gears 85. Therefore, the rotation speed of the fourth gear 76 of the second pair of shift gears 90 becomes higher than the rotation speed of the eighth gear 78 of the second pair of transmission gears 85. Thus, the rotation of the second rotation shaft 54 is transmitted to the third rotation shaft 64 via the second pair of shift gears 90. On the other hand, the rotation of the third rotation shaft 64 is not transmitted to the second rotation shaft 54 by the one-way rotation transmission mechanism 93.

The rotation of the third rotation shaft 64 is transmitted to the output shaft 33 via the third pair of transmission gears 98, in the same manner as in the first speed to the third speed.

Likewise, in the fourth speed, as shown in FIG. 12, a rotation is transmitted from the input shaft 52 to the output shaft 33 via the second clutch 59, the fourth pair of shift gears 83, the first pair of transmission gears 84, the fourth clutch 66, the second pair of shift gears 90, and the third pair of transmission gears 98.

As described above, in this embodiment, the third and fourth clutches 70 and 66 provided in the second rotation shaft 54 are respectively provided with minute leak holes communicating with the working chambers 137 and 133. For this reason, when the third and fourth clutches 70 and 66 rotate in an engagement state, the oil within the working chambers 137 and 133 is sprayed via the leak holes. Accordingly, it is possible to efficiently supply the oil to the output shaft 33 or the third rotation shaft 64. Accordingly, for example, even when the oil reservoir 99 does not extend to a position below the third rotation shaft 64 or the output shaft 33, it is possible to efficiently supply the oil to the respective rotation shafts 52, 53, 54, 64, and 33. Accordingly, it is possible to reduce an amount of the oil collected in the oil reservoir 99. That is, it is possible to reduce the amount of the required oil.

Additionally, for example, it is possible to make short the longitudinal length of the oil reservoir 99. Accordingly, it is possible to allow the oil reservoir 99 to have a large depth. As a result, it is possible to prevent air from being sucked into the oil pump 140.

Since the oil within the working chambers 137 and 133 is sprayed to the output shaft 33 or the third rotation shaft 64, it is not necessary to additionally provide an oil path for supplying oil to the output shaft 33 or the third rotation shaft 64. Accordingly, it is possible to simplify the configuration of the transmission 31. Additionally, it is possible to decrease the weight and size of the transmission 31.

Additionally, in this invention, "the leak hole" corresponds to a hole from which oil comes out. Typically, the leak hole is formed into a circular shape in a cross sectional view. However, the shape of the leak hole is not particularly limited, but may be adequately set in accordance with the characteristic of the clutch. Additionally, for example, the leak hole may be formed by a fitting gap between the pressure plate and the boss portion forming the working chamber.

An area of the flow passage of the leak hole is not particularly limited so long as the size satisfies a state that the clutch is engaged when the hydraulic pressure is supplied to the working chamber. For example, in case of the leak hole with a substantially circular shape in a cross sectional view, a diameter of the leak hole is generally in the range of 1 to 2 mm or so.

As described above, in this embodiment, the oil is sprayed from the leak holes provided in the third and fourth clutches 70 and 66. For this reason, for example, the leak hole is more located on the outside of an axis C3 of the second rotation shaft 54 in a diameter direction than a case in which the leak hole for spraying the oil is directly formed in the second rotation shaft 54. Accordingly, a centrifugal hydraulic pressure applied to the oil increases. As a result, it is possible to more efficiently supply the oil to the third rotation shaft 64.

Additionally, when the third and fourth clutches 70 and 66 are engaged, the rpm of the second rotation shaft 54, the third rotation shaft 64, and the output shaft 33 is larger than a case in which the third and fourth clutches 70 and 66 are disengaged. For this reason, it is necessary to supply a large amount of oil in terms of the second rotation shaft 54, the third rotation shaft 64, and the output shaft 33. Here, in this embodiment, when the third and fourth clutches 70 and 66 are engaged, it becomes a state that oil is supplied to the working chambers 137 and 133. For this reason, the oil is sprayed from the leak holes provided in the third and fourth clutches 70 and 66. Accordingly, according to the configuration of this embodiment, when the rpm of the rotation shaft is fast and a large amount of oil is required for the rotation shaft, it is possible to efficiently supply the oil.

As shown in FIG. 5, in this embodiment, the casing formed by the transmission cover 50 and the crank case 32 is provided with a concave portion located below the output shaft 33. For this reason, a part of oil may be collected in the concave portion. Accordingly, even when the third and fourth clutches 70 and 66 are not engaged, the oil collected in the concave portion may be supplied to the output shaft 33 or the third rotation shaft 64.

Additionally, in this embodiment, there are following correspondence relationships.
Shaft body of first intermediate shaft: second rotation shaft 54 (see FIGS. 2 and 4)
First intermediate shaft: second rotation shaft 54, third clutch 70, fourth clutch 66, third gear 69, fifth gear 73, tenth gear 75, and seventh gear 74 (see FIGS. 2 and 4)
Second intermediate shaft: third rotation shaft 64, fourth gear 76, thirteenth gear 79, sixth gear 77, and eighth gear 78 (see FIGS. 2 and 4)
Casing: crank case 32, transmission cover 50, and generator cover 43 (see FIG. 2)
Oil supply mechanism: oil pump 140 (see FIG. 5)

### <<Second Embodiment>>

In the first embodiment, the scooter type vehicle 1 is used to explain the preferred embodiment of the invention. However, in this invention, the motorcycle is not limited to the scooter type vehicle. In the second embodiment, a so-called moped 2 will be used to explain the preferred embodiment of the invention. Additionally, in the description of the second embodiment, the members having common functions are denoted by the same reference numerals in the first embodiment. FIGS. 4, 7, and 9 to 12 are used as the common references together with the first embodiment.

### (Schematic configuration of moped 2)

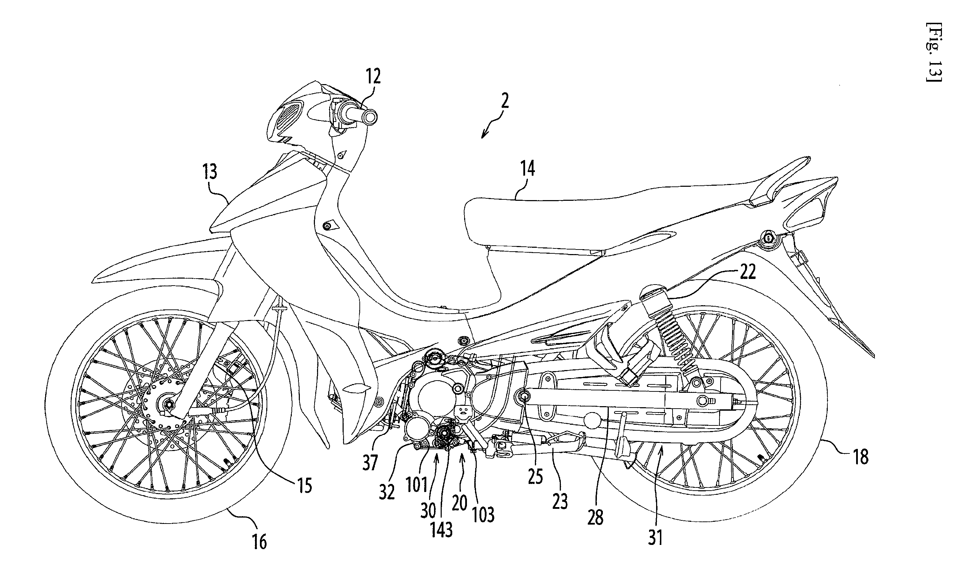

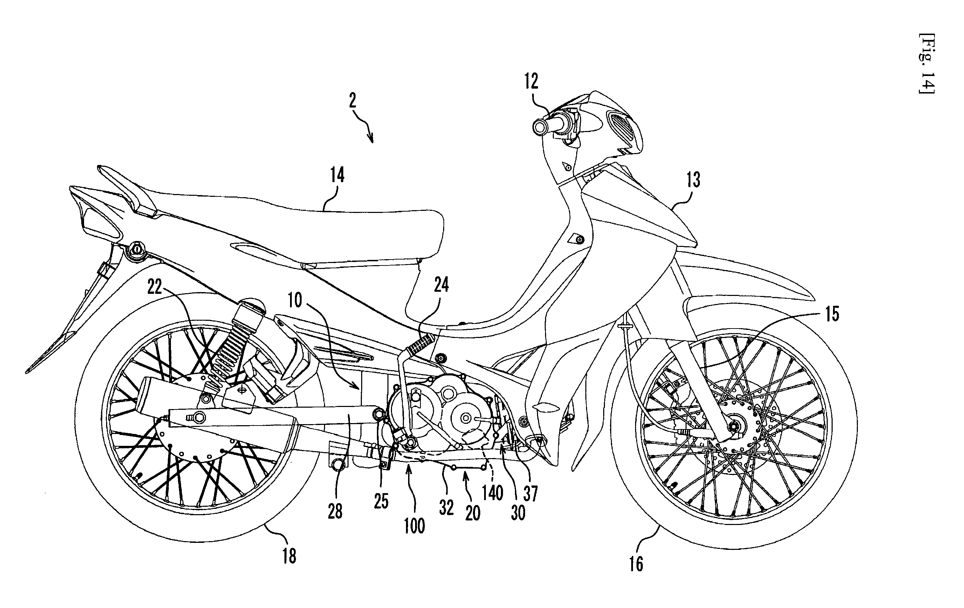

First, the schematic configuration of the moped 2 will be explained with reference to FIGS. 13 and 14. Note that, the terms of front and rear, and left and right as used in the following description indicate the front and rear and the left and right as viewed by a rider seated on a seat 14 of the moped 2.

As shown in FIG. 14, the moped 2 includes the vehicle body frame 10. The vehicle body frame 10 includes the head pipe (not shown). The head pipe extends downward from the front part of the vehicle to the front side in a slightly inclined direction. The steering shaft (not shown) is rotatably inserted in the head pipe. The upper end portion of the steering shaft is provided with the handle 12. Meanwhile, the lower end portion of the steering shaft is connected to the front fork 15. The lower end portion of the front fork 15 is rotatably attached with the front wheel 16 as a driven wheel.

A body cover 13 is attached to the body frame 10. The body cover 13 covers a part of the body frame 10. The seat 14 on which the rider sits is attached to the body cover 13. Further, a side stand 23 is attached to the body frame 10 substantially at the center of the vehicle.

An engine unit 20 is suspended from the body frame 10. In this embodiment, the engine unit 20 is fixed to the body frame 10. That is, the engine unit 20 is an engine unit of a rigid type. While the engine unit 20 of the first embodiment has a relatively long length in the front-rear direction, the engine unit 20 of the second embodiment has a relatively short length in the front-rear direction. More specifically, in the transmission 31 of the engine unit 20 of the first embodiment, the distance between the input shaft 52 and the output shaft 33 is relatively long. On the other hand, in a transmission 31 of the engine unit 20 of the second embodiment, the distance between an input shaft 52 and an output shaft 33 is relatively short. Therefore, the engine unit 20 of the second embodiment is particularly useful for use in a moped, an off-road vehicle, an on-road vehicle, etc. for which a relatively high driving performance is required compared to a scooter type vehicle.

A rear arm 28 that extends rearward is attached to the body frame 10. The rear arm 28 can swing around a pivot shaft 25. A rear wheel 18 serving as a driving wheel is rotatably attached to the rear end of the rear arm 28. The rear wheel 18 is connected to the output shaft 33 of the transmission 31 by power transmitting means (not shown in the figures). Thus, the rear wheel 18 is driven by the engine unit 20. Further, one end of a cushion unit 22 is attached to the rear end of the rear arm 28. The other end of the cushion unit 22 is attached to the body frame 10. This cushion unit 22 suppresses swinging movement of the rear arm 28.

As shown in FIG. 4, in this embodiment, a vehicle speed sensor 88 is provided on the output shaft 33. More specifically, the vehicle speed sensor 88 is provided on a fourteenth gear 80 that rotates together with the output shaft 33. However, the vehicle speed sensor 88 may be provided on a rotation shaft other than the output shaft 33. The vehicle speed sensor 88 may be provided on another member that rotates at a given rotation ratio with respect to the output shaft 33.

### (Structure of the engine unit 20)

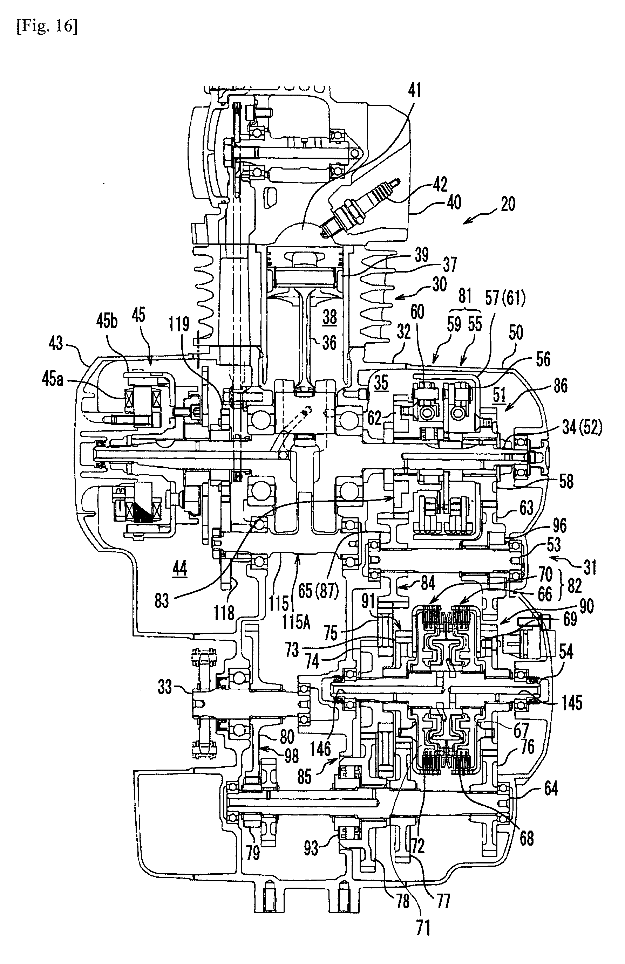

FIG. 16 is a cross sectional view of the engine unit 20. FIG. 4 is a schematic diagram showing the structure of the engine unit 20. As shown in FIG. 16, the engine unit 20 includes an engine 30 and the transmission 31. Note that, in the second embodiment, an example is described in which the engine 30 is a single cylinder engine. However, in the invention, the engine 30 is not limited to a single cylinder engine. The engine 30 may be a multi-cylinder engine, such as a two cylinder engine.

### - Engine 30 -

The engine 30 includes a crank case 32, a cylinder body 37, a cylinder head 40, and a crank shaft 34. A crank chamber 35 is defined in the crank case 32. A cylinder 38 that opens to the crank chamber 35 is defined in the cylinder body 37. The cylinder head 40 is attached to the tip end of the cylinder body 37. The crank shaft 34 that extends in the vehicle width direction is disposed in the crank chamber 35. A connecting rod 36 is attached to the crank shaft 34. A piston 39 disposed in the cylinder 38 is attached to a tip end of the connecting rod 36. A combustion chamber 41 is defined by the piston 39, the cylinder body 37, and the cylinder head 40. A spark plug 42 is attached to the cylinder head 40 such that an ignition section at the tip end of the spark plug 42 is located in the combustion chamber 41.

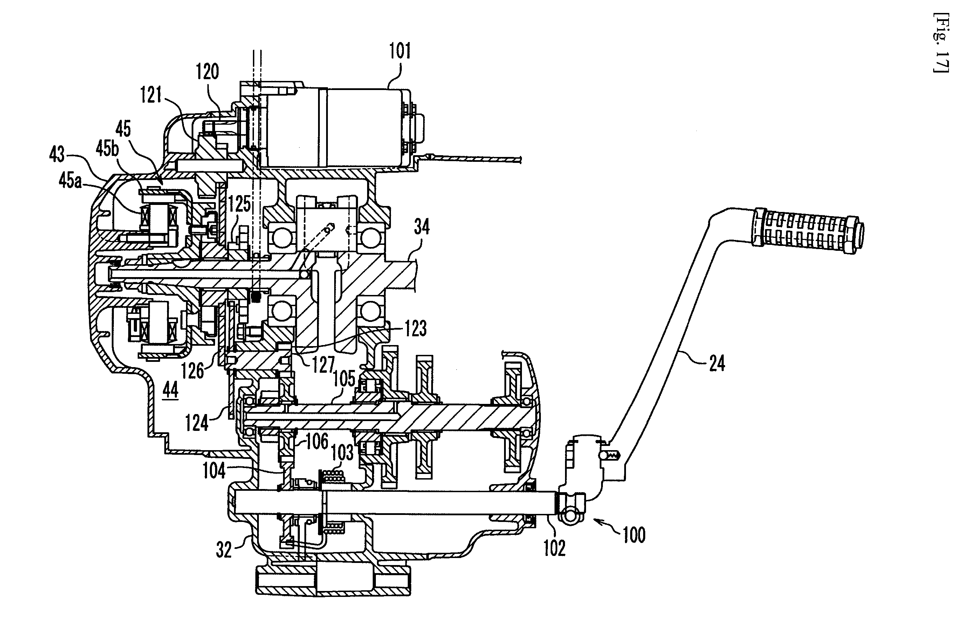

FIG. 17 is a partial cross sectional view of the engine unit 20 that shows a kick starter 100 and a starter 101. As shown in FIG. 14 and FIG. 17, the engine unit 20 is provided with the kick starter 100. The rider of the moped 2 can start the engine 30 by operating the kick starter 100.

The kick starter 100 includes a kick pedal 24. As shown in FIG. 14, the kick pedal 24 is provided to the rear of and below the crank shaft 34, on the right side of the crank case 32. The kick pedal 24 is attached to a kick shaft 102. A compression coil spring 103 is provided between the kick shaft 102 and the crank case 32. The compression coil spring 103 applies, to the kick shaft 102 rotated by the rider's operation, an urging force in a reverse rotating direction. Further, a gear 104 is provided on the kick shaft 102. On the other hand, a gear 106 is rotatably provided on a shaft 105. The gear 104 meshes with the gear 106. Rotation of the kick shaft 102 is transmitted to the crank shaft 34 via the gear 104. Further, the gear 106 meshes with a gear 123 provided on a shaft 127. Accordingly, the rotation of the gear 104 is transmitted to the shaft 127 via the gear 106 and the gear 123. A gear 124 is provided on the shaft 127. The gear 124 meshes with a gear 125 provided on the crank shaft 34. Accordingly, the rotation of the shaft 127 is transmitted to the crank shaft 34 via the gear 124 and the gear 125. Therefore, the crank shaft 34 is rotated by the rider operating the kick pedal 24.

In addition, the starter 101 is also provided in the engine 30. The starter 101 is attached to the crank case 32. The rotation of the starter 101 is transmitted to the crank shaft 34 via gears 120, 121, and 126. Thus, when the starter 101 is driven by the rider's operation, the engine 30 is started.

### - Balancer shaft 115 -

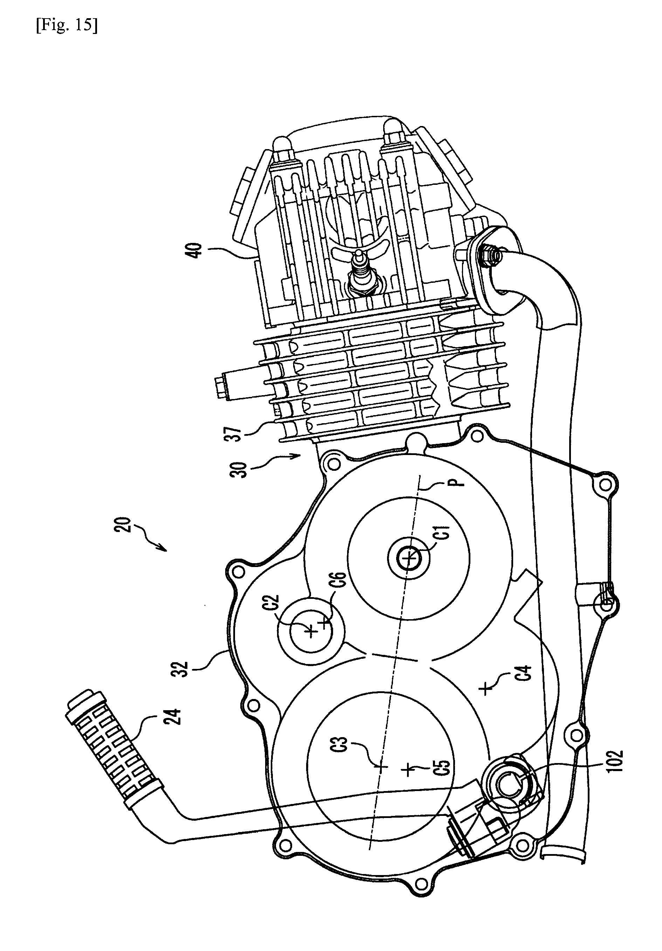

As shown in FIG. 16, a balancer 115A having a balancer shaft 115 is provided in the engine 30. A gear 118 is provided on the balancer shaft 115. The gear 118 meshes with a gear 119 provided on the crank shaft 34. Accordingly, the balancer shaft 115 rotates together with the crank shaft 34. As shown in FIG. 16 and FIG. 15, an axis C6 of the balancer shaft 115 is provided close to an axis C2 of a second rotation shaft 54. As shown in FIG. 16, when viewed from the axial direction of a first rotation shaft 53, at least a part of the first rotation shaft 53, a second gear 63, or a ninth gear 87, and at least a part of the balancer 115A are disposed to overlap with each other. Particularly, the balancer shaft 115 is disposed so that at least a part thereof overlaps with the first rotation shaft 53 when viewed from the axial direction of the first rotation shaft 53. The balancer shaft 115 is located at the center, in the vehicle width direction, of the crank shaft 34 to which a connecting rod 36 is connected. On the other hand, the first rotation shaft 53 is located on the right side in the vehicle width direction. The balancer shaft 115 and the first rotation shaft 53 are offset in the vehicle width direction. In other words, the balancer shaft 115 and the first rotation shaft 53 are disposed so as not to overlap with each other in the vehicle width direction.

### - Generator 45 -

As shown in FIG. 16 and FIG. 17, a generator cover 43 is attached to the left side of the crank case 32. A generator housing 44 is defined by the generator cover 43 and the crank case 32.

The left end of the crank shaft 34 protrudes from the crank chamber 35 and reaches the generator housing 44. The generator 45 is attached to the left end of the crank shaft 34 in the generator housing 44. The generator 45 includes an inner 45a and an outer 45b. The inner 45a is attached such that it cannot rotate with respect to the crank case 32. Note that, the outer 45b is attached to the left end of the crank shaft 34. The outer 45b rotates together with the crank shaft 34. Accordingly, when the crank shaft 34 rotates, the outer 45b rotates relatively with respect to the inner 45a. Thus, power generation is performed.

A transmission cover 50 is attached to the right side of the crank case 32. The transmission cover 50 and the crank case 32 define a transmission housing 51 located on the left side of the crank case 32.

### - Structure of the transmission 31 -

Next, mainly referring to FIG. 4, the structure of the transmission 31 will be described in detail. The transmission 31 is a four-speed stepped automatic transmission that includes the input shaft 52 and the output shaft 33. The transmission 31 is a gear train stepped transmission in which power is transmitted from the input shaft 52 to the output shaft 33 via a plurality of pairs of shift gears.

The right end of the crank shaft 34 protrudes from the crank chamber 35, and reaches the transmission housing 51. The crank shaft 34 also serves as the input shaft 52 of the transmission 31.

### - Structure of the rotation shafts -

The transmission 31 has the first rotation shaft 53, the second rotation shaft 54, a third rotation shaft 64, and the output shaft 33. The first rotation shaft 53, the second rotation shaft 54, the third rotation shaft 64, and the output shaft 33 are respectively provided in parallel with the input shaft 52.

In FIG. 15, the reference numerals C1, C2, C3, C4, and C5 respectively represent the axis of the input shaft 52, the axis of the first rotation shaft 53, the axis of the second rotation shaft 54, the axis of the third rotation shaft 64, and the axis of the output shaft 33. As shown in FIG. 15, all of the rotation shafts of the input shaft 52, the first rotation shaft 53, the second rotation shaft 54, and the third rotation shaft 64 are arranged adjacent to each other, in a side view. In other words, the input shaft 52, the first rotation shaft 53, the second rotation shaft 54, and the third rotation shaft 64 are arranged such that the axis C1 of the input shaft 52, the axis C2 of the first rotation shaft 53, the axis C3 of the second rotation shaft 54, and the axis C4 of the third rotation shaft 64 form a rectangular shape in a side view.

As shown in FIG. 15, at least one of the axis C2 of the first rotation shaft 53 and the axis C4 of the third rotation shaft 64 is not located on a plane P that includes the axis C1 of the input shaft 52 and the axis C3 of the second rotation shaft 54. In more detail, the axis C2 of the first rotation shaft 53 is located on one side of the plane P, while the axis C4 of the third rotation shaft 64 is located on the other side of the plane P. More specifically, the axis C2 of the first rotation shaft 53 is located on the upper side of the plane P, while the axis C4 of the third rotation shaft 64 is located on the lower side of the plane P. Therefore, the axis C2 of the first rotation shaft 53 is located at a position that is relatively further upward, while the third rotation shaft 64 is located at a position that is relatively further downward.

The axis C4 of the third rotation shaft 64 is located in front of the axis C3 of the second rotation shaft 54, in the front-rear direction. In more detail, the axis C4 of the third rotation shaft 64 is located between the axis C3 of the second rotation shaft 54 and the axis C1 of the input shaft 52, in the front-rear direction.

As shown in FIG. 15, the axis C5 of the output shaft 33 is located above and to the rear of the axis C4 of the third rotation shaft 64. In a side view, the axis C5 of the output shaft 33 is located outside of a virtual rectangle formed by the axis C1 of the input shaft 52, the axis C2 of the first rotation shaft 53, the axis C3 of the second rotation shaft 54, and the axis C4 of the third rotation shaft 64. The axis C5 of the output shaft 33 is located, in a side view, to the rear of the axis C3 of the second rotation shaft 54.

Note that the plane P extends upward to the rear. That is, the axis C3 of the second rotation shaft 54 is located in a higher position than the axis C1 of the input shaft 52.

Note that, in the second embodiment, an example will be described in which the output shaft 33 and the third rotation shaft 64 are separately provided. However, the invention is not limited to this structure. The output shaft 33 and the third rotation shaft 64 may be common. In other words, the rear wheel 18 may be attached to the third rotation shaft 64.

### - A group of clutches 81 on the upstream side -

As shown in FIG. 16 and FIG. 4, the input shaft 52 is provided with a group of clutches 81 on the upstream side. The group of clutches 81 on the upstream side includes a first clutch 55 and a second clutch 59. The first clutch 55 is disposed on the right side of the second clutch 59. The first clutch 55 and the second clutch 59 are centrifugal clutches. More specifically, in the first embodiment, the first clutch 55 and the second clutch 59 are drum type centrifugal clutches. However, the invention is not limited to this structure. The second clutch 59 may be a clutch other than a centrifugal clutch. For example, the second clutch 59 may be a hydraulic clutch.

The first clutch 55 includes an inner 56 as an input side clutch member, and an outer 57 as an output side clutch member. The inner 56 is provided such that it cannot rotate with respect to the input shaft 52. Accordingly, the inner 56 rotates together with the input shaft 52. On the other hand, the outer 57 can rotate with respect to the input shaft 52. When the rotation speed of the input shaft 52 becomes higher than a predetermined rotation speed, the inner 56 and the outer 57 come into contact due to centrifugal force acting on the inner 56. Thus, the first clutch 55 is engaged. On the other hand, when the inner 56 and the outer 57 are rotating in the engaged state, if the rotation speed thereof becomes lower than the predetermined rotation speed, the centrifugal force acting on the inner 56 is reduced. As a result, the inner 56 and the outer 57 separate. Thus, the first clutch 55 is disengaged.

The second clutch 59 includes an inner 60 as an output side clutch member, and an outer 61 as an input side clutch member. The inner 60 is provided such that it cannot rotate with respect to an eleventh gear 62 to be described later. When the input shaft 52 rotates, the rotation is transmitted to the inner 60 via a first pair of shift gears 86, the first rotation shaft 53, and a fourth pair of shift gears 83. Accordingly, the inner 60 rotates together with the rotation of the input shaft 52. The outer 61 can rotate with respect to the input shaft 52. When the rotation speed of the input shaft 52 becomes higher than a predetermined rotation speed, the inner 60 and the outer 61 come into contact due to centrifugal force acting on the inner 60. Thus, the second clutch 59 is engaged. On the other hand, when the inner 60 and the outer 61 are rotating in the engaged state, if the rotation speed thereof becomes lower than the predetermined rotation speed, the centrifugal force acting on the inner 60 is reduced. As a result, the inner 60 and the outer 61 separate. Thus, the second clutch 59 is disengaged.

Note that, in the second embodiment, the outer 57 and the outer 61 are formed by the same member. However, the invention is not limited to this structure. The outer 57 and the outer 61 may be formed by separate members.

The rotation speed of the input shaft 52 when the first clutch 55 is engaged, and the rotation speed of the input shaft 52 when the second clutch 59 is engaged are different from each other. In other words, the rotation speed of the inner 56 when the first clutch 55 is engaged, and the rotation speed of the inner 60 when the second clutch 59 is engaged are different from each other. More specifically, the rotation speed of the input shaft 52 when the first clutch 55 is engaged is lower than the rotation speed of the input shaft 52 when the second clutch 59 is engaged. To be more specific, the first clutch 55 is engaged when the rotation speed of the input shaft 52 is equal to or higher than a first rotation speed. On the other hand, the first clutch 55 is disengaged when the rotation speed of the input shaft 52 is lower than the first rotation speed. The second clutch 59 is engaged when the rotation speed of the input shaft 52 is equal to or higher than a second rotation speed that is higher than the first rotation speed. On the other hand, the second clutch 59 is disengaged when the rotation speed of the input shaft 52 is lower than the second rotation speed.

A first gear 58 is provided on the outer 57 of the first clutch 55 such that it cannot rotate with respect to the outer 57. The first gear 58 rotates together with the outer 57 of the first clutch 55. In addition, a second gear 63 is provided on the first rotation shaft 53. The second gear 63 meshes with the first gear 58. The first gear 58 and the second gear 63 form the first pair of shift gears 86. In this embodiment, the first pair of shift gears 86 is a pair of first speed shift gears.

The second gear 63 is a one-way gear. More specifically, the second gear 63 transmits the rotation of the first gear 58 to the first rotation shaft 53. On the other hand, the second gear 63 does not transmit the rotation of the first rotation shaft 53 to the input shaft 52. That is, the second gear 63 also serves as a one-way rotation transmission mechanism 96.

The eleventh gear 62 is provided on the inner 60 that is an output side clutch member of the second clutch 59. The eleventh gear 62 rotates together with the inner 60. In addition, a twelfth gear 65 is provided on the first rotation shaft 53. The twelfth gear 65 meshes with the eleventh gear 62. The twelfth gear 65 and the eleventh gear 62 form the fourth pair of shift gears 83. The fourth pair of shift gears 83 has a gear ratio different from that of the first pair of shift gears 86. More specifically, the fourth pair of shift gears 83 has a gear ratio smaller than that of the first pair of shift gears 86. The fourth pair of shift gears 83 is a pair of second speed shift gears.

Between the first pair of shift gears 86 and the fourth pair of shift gears 83, the first clutch 55 and the second clutch 59 are located. In other words, the first clutch 55 and the second clutch 59 are disposed between the first pair of shift gears 86 and the fourth pair of shift gears 83.

In this embodiment, the twelfth gear 65 also functions as a ninth gear 87. In other words, the twelfth gear 65 and the ninth gear 87 are common. A tenth gear 75 is provided on the second rotation shaft 54 such that it cannot rotate with respect to the second rotation shaft 54. The tenth gear 75 rotates together with the second rotation shaft 54. The ninth gear 87 that also functions as the twelfth gear 65 meshes with the tenth gear 75. The ninth gear 87 that also functions as the twelfth gear 65 and the tenth gear 75 form a first pair of transmission gears 84.

A seventh gear 74 is provided on the second rotation shaft 54 such that it cannot rotate with respect to the second rotation shaft 54. The seventh gear 74 rotates together with the second rotation shaft 54. Moreover, an eighth gear 78 is provided on the third rotation shaft 64 such that it cannot rotate with respect to the third rotation shaft 64. The third rotation shaft 64 rotates together with the eighth gear 78. The seventh gear 74 and the eighth gear 78 mesh with each other. The seventh gear 74 and the eighth gear 78 form a second pair of transmission gears 85.

The eighth gear 78 is a one-way gear. More specifically, the eighth gear 78 transmits rotation of the second rotation shaft 54 to the third rotation shaft 64. On the other hand, the eighth gear 78 does not transmit rotation of the third rotation shaft 64 to the second rotation shaft 54. That is, the eighth gear 78 also serves as a one-way rotation transmission mechanism 93.

Note that it is not essential in the invention that the eighth gear 78 is a one-way gear. For example, a structure may be adopted in which the eighth gear 78 is a normal gear, and the seventh gear 74 is a one-way gear. In other words, the seventh gear 74 may also serve as a one-way rotation transmission mechanism. More specifically, a structure may be adopted in which the seventh gear 74 transmits the rotation of the second rotation shaft 54 to the eighth gear 78, but it does not transmit the rotation of the eighth gear 78 to the second rotation shaft 54.

### - A group of clutches 82 on the downstream side -

The second rotation shaft 54 is provided with a group of clutches 82 on the downstream side. The group of clutches 82 on the downstream side is located to the rear of the group of clutches 81 on the upstream side. As shown in FIG. 16, the group of clutches 82 on the downstream side and the group of clutches 81 on the upstream side are disposed at locations where they at least partially overlap in the axial direction of the input shaft 52. In other words, the group of clutches 82 on the downstream side and the group of clutches 81 on the upstream side are disposed at locations where they at least partially overlap in the vehicle width direction. In more detail, the group of clutches 82 on the downstream side and the group of clutches 81 on the upstream side are disposed at locations where they substantially overlap in the vehicle width direction.

The group of clutches 82 on the downstream side includes a third clutch 70 and a fourth clutch 66. The fourth clutch 66 is disposed on the right side of the third clutch 70. Therefore, the direction in which the first clutch 55 is located with respect to the second clutch 59 is the same as the direction in which the fourth clutch 66 is located with respect to the third clutch 70. As shown in FIG. 16, the first clutch 55 and the fourth clutch 66 are disposed so that they at least partially overlap in the vehicle width direction. In other words, the first clutch 55 and the fourth clutch 66 are disposed so that they at least partially overlap in the axial direction of the input shaft 52. Also, the second clutch 59 and the third clutch 70 are disposed so that they at least partially overlap in the vehicle width direction. In other words, the second clutch 59 and the third clutch 70 are disposed so that they at least partially overlap in the axial direction of the input shaft 52. Specifically, the first clutch 55 and the fourth clutch 66 are disposed so that they substantially overlap in the vehicle width direction. Also, the second clutch 59 and the third clutch 70 are disposed so that they substantially overlap in the vehicle width direction.

In this embodiment, the third clutch 70 and the fourth clutch 66 are hydraulic clutches. More specifically, in the first embodiment, the third clutch 70 and the fourth clutch 66 are disc type hydraulic clutches. However, the invention is not limited to this structure. The fourth clutch 66 and the third clutch 70 may be clutches other than hydraulic clutches. For example, the fourth clutch 66 and the third clutch 70 may be centrifugal clutches. However, it is preferable that the fourth clutch 66 and the third clutch 70 are hydraulic clutches.

As described above, in the invention, the first clutch 55 is a centrifugal clutch, and at least one of the second clutch 59, the third clutch 70 and the fourth clutch 66 may be a hydraulic clutch. As long as this condition is met, the second clutch 59, the third clutch 70 and the fourth clutch 66 may be drum type or disc type centrifugal clutches, or may be drum type or disc type hydraulic clutches. However, it is desirable for two or more of the second clutch 59, the third clutch 70 and the fourth clutch 66 to be hydraulic clutches. In particular, it is desirable for the second clutch 59 to be a centrifugal clutch and for the third clutch 70 and the fourth clutch 66 to be hydraulic clutches. Then, it is desirable for the third clutch 70 and the fourth clutch 66 that are hydraulic clutches to be disposed on the same rotation shaft and for the first clutch 55 and the second clutch 59 that are centrifugal clutches to be disposed on a separate rotation shaft.

The rotation speed of the second rotation shaft 54 when the third clutch 70 is engaged, and the rotation speed of the second rotation shaft 54 when the fourth clutch 66 is engaged are different from each other. In other words, the rotation speed of the inner 71 when the third clutch 70 is engaged, and the rotation speed of the inner 67 when the fourth clutch 66 is engaged are different from each other. More specifically, the rotation speed of the second rotation shaft 54 when the third clutch 70 is engaged is lower than the rotation speed of the second rotation shaft 54 when the fourth clutch 66 is engaged.

The third clutch 70 is provided with the inner 71 as an input side clutch member, and an outer 72 as an output side clutch member. The inner 71 is provided such that it cannot rotate with respect to the second rotation shaft 54. Accordingly, the inner 71 rotates together with the rotation of the second rotation shaft 54. On the other hand, the outer 72 can rotate with respect to the second rotation shaft 54. In a state where the third clutch 70 is disengaged, when the second rotation shaft 54 rotates, the inner 71 rotates together with the second rotation shaft 54, but the outer 72 does not rotate together with the second rotation shaft 54. In a state where the third clutch 70 is engaged, both the inner 71 and the outer 72 rotate together with the second rotation shaft 54.

A fifth gear 73 is attached to the outer 72 that is an output side clutch member of the third clutch 70. The fifth gear 73 rotates together with the outer 72. On the other hand, a sixth gear 77 is provided on the third rotation shaft 64 such that it cannot rotate with respect to the third rotation shaft 64. The sixth gear 77 rotates together with the third rotation shaft 64. The fifth gear 73 and the sixth gear 77 mesh with each other. Therefore, the rotation of the outer 72 is transmitted to the third rotation shaft 64 via the fifth gear 73 and the sixth gear 77.

The fifth gear 73 and the sixth gear 77 form a third pair of shift gears 91. The third pair of shift gears 91 has a gear ratio that is different from those of the first pair of shift gears 86, the fourth pair of shift gears 83, and a second pair of shift gears 90.

The third pair of shift gears 91 is located with respect to the third clutch 70 on the same side on which the fourth pair of shift gears 83 is located with respect to the second clutch 59. More specifically, the third pair of shift gears 91 is located on the left side of the third clutch 70. In a similar manner, the fourth pair of shift gears 83 is located on the left side of the second clutch 59.

Further, the third pair of shift gears 91 and the fourth pair of shift gears 83 are disposed so that they at least partially overlap with each other in the vehicle width direction. In other words, the third pair of shift gears 91 and the fourth pair of shift gears 83 are disposed so that they at least partially overlap with each other in the axial direction of the input shaft 52. More specifically, the third pair of shift gears 91 and the fourth pair of shift gears 83 are disposed so that they substantially overlap in the vehicle width direction.

The fourth clutch 66 is provided with the inner 67 as an input side clutch member and an outer 68 as an output side clutch member. The inner 67 is provided such that it cannot rotate with respect to the second rotation shaft 54. Accordingly, the inner 67 rotates together with the rotation of the second rotation shaft 54. On the other hand, the outer 68 can rotate with respect to the second rotation shaft 54. In a state where the fourth clutch 66 is disengaged, when the second rotation shaft 54 rotates, the inner 67 rotates together with the second rotation shaft 54, but the outer 68 does not rotate together with the second rotation shaft 54. In a state where the fourth clutch 66 is engaged, both of the inner 67 and the outer 68 rotate together with the second rotation shaft 54.

A third gear 69 is attached to the outer 68 that is an output side clutch member of the fourth clutch 66. The third gear 69 rotates together with the outer 68. On the other hand, a fourth gear 76 is provided on the third rotation shaft 64 such that it cannot rotate with respect to the third rotation shaft 64. The fourth gear 76 rotates together with the third rotation shaft 64. The third gear 69 and the fourth gear 76 mesh with each other. Therefore, the rotation of the outer 68 is transmitted to the third rotation shaft 64 via the third gear 69 and the fourth gear 76.

The fourth gear 76 and the third gear 69 form the second pair of shift gears 90. The second pair of shift gears 90 has a gear ratio that is different from those of the first pair of shift gears 86, the third pair of shift gears 91 and the fourth pair of shift gears 83.

Between the third pair of shift gears 91 and the second pair of shift gears 90, the third clutch 70 and the fourth clutch 66 are located. In other words, the third clutch 70 and the fourth clutch 66 are disposed between the third pair of shift gears 91 and the second pair of shift gears 90.

The second pair of shift gears 90 is located with respect to the fourth clutch 66 on the same side on which the first pair of shift gears 86 is located with respect to the first clutch 55. More specifically, the second pair of shift gears 90 is located on the right side of the fourth clutch 66. In a similar manner, the first pair of shift gears 86 is located on the right side of the first clutch 55.

Further, the second pair of shift gears 90 and the first pair of shift gears 86 are disposed so that they at least partially overlap with each other in the vehicle width direction. In other words, the second pair of shift gears 90 and the first pair of shift gears 86 are disposed so that they at least partially overlap with each other in the axial direction of the input shaft 52. More specifically, the second pair of shift gears 90 and the first pair of shift gears 86 are disposed so that they substantially overlap in the vehicle width direction.

A thirteenth gear 79 is provided on the third rotation shaft 64 such that it cannot rotate with respect to the third rotation shaft 64. The thirteenth gear 79 is disposed on the left side of the fourth gear 76 and the sixth gear 77, in the vehicle width direction. The thirteenth gear 79 rotates together with the third rotation shaft 64. On the other hand, the fourteenth gear 80 is provided on the output shaft 33 such that it cannot rotate with respect to the output shaft 33. In other words, the fourteenth gear 80 rotates together with the output shaft 33. The fourteenth gear 80 and the thirteenth gear 79 form a third pair of transmission gears 98. The third pair of transmission gears 98 transmits the rotation of the third rotation shaft 64 to the output shaft 33.

### - Detailed structure of the group of clutches 82 on the downstream side -

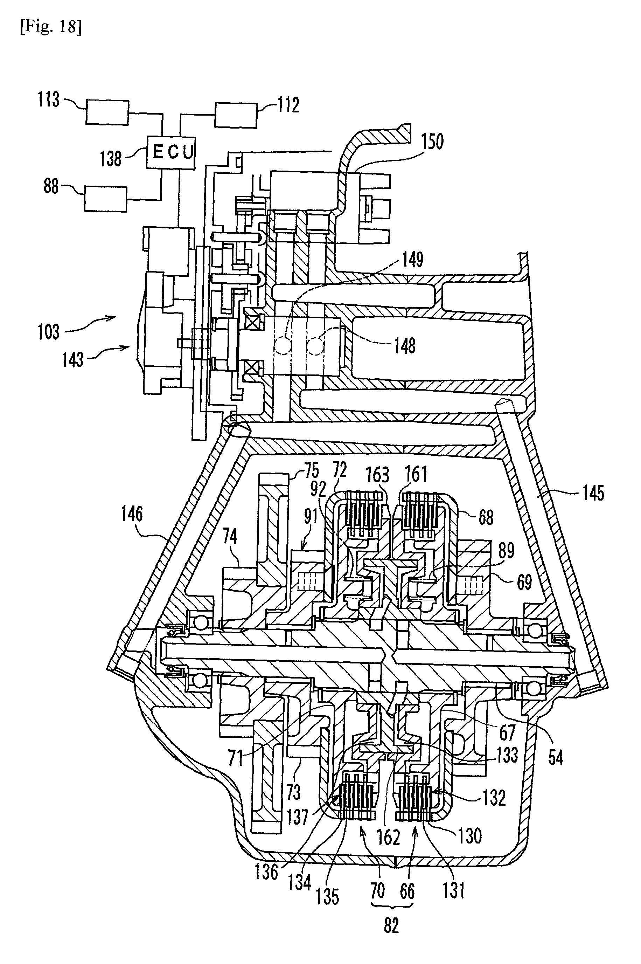

Next, referring mainly to FIG. 18, the group of clutches 82 on the downstream side will be described in further detail.

The third clutch 70 is provided with a plate group 136. The plate group 136 includes a plurality of friction plates 134 and a plurality of clutch plates 135. The plurality of friction plates 134 and the plurality of clutch plates 135 are alternately laminated in the vehicle width direction. The friction plates 134 are unrotatable with respect to the outer 72. On the other hand, the clutch plates 135 are unrotatable with respect to the inner 71.

The inner 71 is rotatable with respect to the outer 72. A pressure plate 163 is disposed on the side of the inner 71 opposite to the outer 72 in the vehicle width direction. The pressure plate 163 is urged rightward in the vehicle width direction by a compression coil spring 92. That is, the pressure plate 163 is urged to a boss portion 162 by the compression coil spring 92.

A working chamber 137 is defined between the boss portion 162 and the pressure plate 163. The working chamber 137 is filled with oil. When a hydraulic pressure within the working chamber 137 increases, the pressure plate 163 is displaced in a direction away from the boss portion 162. Accordingly, a distance between the pressure plate 163 and the inner 71 becomes short. Accordingly, the plate group 136 becomes in a press-contact state. As a result, the inner 71 and the outer 72 rotate together, and the third clutch 70 becomes in an engagement state.

On the other hand, when the pressure within the working chamber 137 decreases, the pressure plate 163 is displaced to the boss portion 162 by the compression coil spring 92. Accordingly, the press-contact state of the plate group 136 is released. As a result, the inner 71 and the outer 72 are relatively rotatable with respect to each other, and the third clutch 70 is disengaged.

Although not shown in the figures, a tiny leak hole that communicates with the working chamber 137 is formed in the third clutch 70. Further, a gap between the inner 71 and the outer 72 is not sealed. Thus, the oil in the working chamber 137 can be rapidly discharged when the clutch 70 is disengaged. Therefore, according to the embodiment, the response of the clutch 70 can be improved. In addition, according to the embodiment, the oil scattering from the leak hole or the gap between the inner 71 and the outer 72 can be used to lubricate other sliding sections effectively.

The fourth clutch 66 is provided with a plate group 132. The plate group 132 includes a plurality of friction plates 130 and a plurality of clutch plates 131. The plurality of friction plates 130 and the plurality of clutch plates 131 are alternately laminated in the vehicle width direction. The friction plates 130 are unrotatable with respect to the outer 68. Meanwhile, the clutch plates 131 are unrotatable with respect to the inner 67.

The inner 67 is rotatable with respect to the outer 68 and is displaceable in the vehicle width direction. A pressure plate 161 is disposed on the side of the inner 67 opposite to the outer 68 in the vehicle width direction. The pressure plate 161 is urged leftward in the vehicle width direction by a compression coil spring 89. That is, the pressure plate 161 is urged to the boss portion 162 by the compression coil spring 89.

A working chamber 133 is defined between the boss portion 162 and the pressure plate 161. The working chamber 133 is filled with oil. When the hydraulic pressure within the working chamber 133 increases, the pressure plate 161 is displaced in a direction away from the boss portion 162. Accordingly, a distance between the pressure plate 161 and the inner 67 becomes short. Accordingly, the plate group 132 becomes in a pressure-contact state. As a result, the inner 67 and the outer 68 rotate together, and the fourth clutch 66 becomes in an engagement state.

On the other hand, when the pressure within the working chamber 133 decreases, the pressure plate 161 is displaced to the boss portion 162 by the compression coil spring 89. Accordingly, the press-contact state of the plate group 132 is released. As a result, the inner 67 and the outer 68 are relatively rotatable with respect to each other, and the fourth clutch 66 is disengaged.

Although not shown in the figures, a tiny leak hole that communicates with the working chamber 133 is formed in the fourth clutch 66. Further, a gap between the inner 67 and the outer 68 is not sealed. Thus, the oil in the working chamber 133 can be rapidly discharged when the clutch 66 is disengaged. Therefore, according to the embodiment, the response of the clutch 66 can be improved. In addition, according to the embodiment, the oil scattering from the leak hole or the gap between the inner 67 and the outer 68 can be used to lubricate other sliding sections effectively.

### - Oil path 139 -

As shown in FIG. 7, an oil pump 140 applies and regulates the pressure in the working chamber 133 of the fourth clutch 66 and the pressure in the working chamber 137 of the third clutch 70. As shown in FIG. 7, an oil reservoir 99 is formed at the bottom of the crank chamber 35. A strainer 141 is immersed in the oil reservoir 99. The strainer 141 is connected to the oil pump 140. When the oil pump 140 is driven, the oil accumulated in the oil reservoir 99 is pumped up via the strainer 141.

A relief valve 147 is provided in the middle of a first oil path 144. The pumped oil is purified by an oil cleaner 142, and is regulated to a predetermined pressure by the relief valve 147. After that, a part of the purified oil is supplied to the crank shaft 34 and a sliding section in the cylinder head 40. Further, a part of the purified oil is also supplied to the working chamber 133 of the fourth clutch 66 and the working chamber 137 of the third clutch 70. More specifically, a second oil path 145 and a third oil path 146 are connected to the first oil path 144 that extends from the oil cleaner 142. The second oil path 145 extends from a valve 143, and passes on the transmission cover 50 side. Then, from the right end of the second rotation shaft 54, it extends through the inside of the second rotation shaft 54. Then, the second oil path 145 reaches the working chamber 133. Accordingly, the oil is supplied to the working chamber 133 via the second oil path 145, and the pressure in the working chamber 133 is regulated. On the other hand, the third oil path 146 extends from the valve 143, and passes on the crank case 32 side. Then, from the left end of the second rotation shaft 54, it extends through the inside of the second rotation shaft 54. Then, the third oil path 146 reaches the working chamber 137. Accordingly, the oil is supplied to the working chamber 137 via the third oil path 146.

The valve 143 is provided at the connecting section of the first oil path 144, the second oil path 145, and the third oil path 146. The valve 143 opens and closes between the first oil path 144 and the third oil path 146, and between the first oil path 144 and the second oil path 145.

As shown in FIG. 18, a motor 150 that drives the valve 143 is attached to the valve 143. The motor 150 drives the valve 143, whereby the third clutch 70 and the fourth clutch 66 are engaged/disengaged. That is, in this embodiment, the oil pump 140, the valve 143, and the motor 150 form an actuator 103 that applies hydraulic pressure to the third clutch 70 and the fourth clutch 66 that are hydraulic clutches. An ECU 138 shown in FIG. 18 controls the actuator 103 that regulates the hydraulic pressures of the third clutch 70 and the fourth clutch 66. More specifically, the hydraulic pressures in the working chamber 133 and the working chamber 137 are regulated. Thus, the third clutch 70 and the fourth clutch 66 are engaged/disengaged.

To be more specific, as shown in FIG. 18, a throttle opening degree sensor 112 and the vehicle speed sensor 88 are connected to the ECU 138. The ECU 138 serving as a control portion controls the actuator 103 based on at least one of the throttle opening degree detected by the throttle opening degree sensor 112 and the vehicle speed detected by the vehicle speed sensor 88. In this embodiment, the ECU 138 serving as the control portion controls the actuator 103 based on both the throttle opening degree detected by the throttle opening degree sensor 112 and the vehicle speed detected by the vehicle speed sensor 88. More specifically, the ECU 138 controls the actuator 103 based on information that is obtained by applying the throttle opening degree output from the throttle opening degree sensor 112 and the vehicle speed output from the vehicle speed sensor 88 to a V-N diagram read from a memory 113.

Specifically, the valve 143 is formed in a substantially cylindrical shape. An internal path 148 for connecting the first oil path 144 and the second oil path 145, and an internal path 149 for connecting the first oil path 144 and the third oil path 146 are formed in the valve 143. The internal paths 148 and 149 are designed to select one of the following positions when the valve 143 is rotated by the motor 150: a position where the first oil path 144 and the second oil path 145 are connected, while the first oil path 144 and the third oil path 146 are disconnected; a position where the first oil path 144 and the third oil path 146 are connected, while the first oil path 144 and the second oil path 145 are disconnected; and a position where the first oil path 144 and the third oil path 146 are disconnected, and the first oil path 144 and the second oil path 145 are also disconnected. Thus, one of the following states is selected: a state where both the fourth clutch 66 and the third clutch 70 are disengaged; a state where the fourth clutch 66 is engaged, while the third clutch 70 is disengaged; and a state where the fourth clutch 66 is disengaged, while the third clutch 70 is engaged.

### - Operation of the transmission 31 -

Next, the operation of the transmission 31 will be described in detail with reference to FIG. 9 to FIG. 12.

### - First speed when starting from standstill -

First, when the engine 30 is started, the crank shaft 34 (the input shaft 52) starts to rotate. The inner 56 of the first clutch 55 rotates together with the input shaft 52. Therefore, when the rotation speed of the input shaft 52 becomes equal to or higher than a predetermined rotation speed (the first rotation speed), and a centrifugal force equal to or larger than a predetermined magnitude is applied to the inner 56, the first clutch 55 is engaged as shown in FIG. 9. When the first clutch 55 is engaged, the first pair of shift gears 86 rotates together with the outer 57 of the first clutch 55. Thus, the rotation of the input shaft 52 is transmitted to the first rotation shaft 53.

The ninth gear 87 rotates together with the first rotation shaft 53. Accordingly, the first pair of transmission gears 84 also rotates along with the rotation of the first rotation shaft 53. Thus, the rotation of the first rotation shaft 53 is transmitted to the second rotation shaft 54 via the first pair of transmission gears 84.

The seventh gear 74 rotates together with the second rotation shaft 54. Accordingly, the second pair of transmission gears 85 also rotates along with the rotation of the second rotation shaft 54. Thus, the rotation of the second rotation shaft 54 is transmitted to the third rotation shaft 64 via the second pair of transmission gears 85.

The thirteenth gear 79 rotates together with the third rotation shaft 64. Accordingly, the third pair of transmission gears 98 also rotates along with the rotation of the third rotation shaft 64. Thus, the rotation of the third rotation shaft 64 is transmitted to the output shaft 33 via the third pair of transmission gears 98.

In this manner, when the moped 2 is started from standstill, that is, in the first speed, rotation is transmitted from the input shaft 52 to the output shaft 33 via the first clutch 55, the first pair of shift gears 86, the first pair of transmission gears 84, the second pair of transmission gears 85, and the third pair of transmission gears 98, as shown in FIG. 9.

### - Second speed -

In the first speed, the twelfth gear 65 common with the ninth gear 87 rotates together with the first rotation shaft 53. Therefore, the eleventh gear 62 meshing with the twelfth gear 65 and the inner 60 of the second clutch 59 also rotate together. Accordingly, as the rotation speed of the input shaft 52 increases, the rotation speed of the inner 60 of the second clutch 59 also increases. When the rotation speed of the input shaft 52 becomes equal to or higher than the second rotation speed that is higher than the first rotation speed, the rotation speed of the inner 60 also increases accordingly, and the second clutch 59 is engaged, as shown in FIG. 10.

Note that, in this embodiment, the gear ratio of the fourth pair of shift gears 83 is smaller than the gear ratio of the first pair of shift gears 86. As a result, the rotation speed of the twelfth gear 65 is higher than the rotation speed of the second gear 63. Accordingly, rotation is transmitted from the input shaft 52 to the first rotation shaft 53 via the fourth pair of shift gears 83. On the other hand, the rotation of the first rotation shaft 53 is not transmitted to the input shaft 52 by the one-way rotation transmission mechanism 96.

The rotation force is transmitted from the first rotation shaft 53 to the output shaft 33, in the same manner as in the first speed, via the first pair of transmission gears 84, the second pair of transmission gears 85, and the third pair of transmission gears 98.

In this manner, in the second speed, rotation is transmitted from the input shaft 52 to the output shaft 33 via the second clutch 59, the fourth pair of shift gears 83, the first pair of transmission gears 84, the second pair of transmission gears 85, and the third pair of transmission gears 98, as shown in FIG. 10.

### - Third speed -

In the second speed, when the rotation speed of the crank shaft 34 (i.e., the input shaft 52) becomes higher than the second rotation speed, and the vehicle speed becomes equal to or higher than a predetermined vehicle speed, the valve 143 is driven and the third clutch 70 is engaged, as shown in FIG. 11. As a result, the third pair of shift gears 91 starts to rotate. Note that the gear ratio of the third pair of shift gears 91 is smaller than the gear ratio of the second pair of transmission gears 85. Therefore, the rotation speed of the sixth gear 77 of the third pair of shift gears 91 becomes higher than the rotation speed of the eighth gear 78 of the second pair of transmission gears 85. Thus, the rotation of the second rotation shaft 54 is transmitted to the third rotation shaft 64 via the third pair of shift gears 91. On the other hand, the rotation of the third rotation shaft 64 is not transmitted to the second rotation shaft 54 by the one-way rotation transmission mechanism 93.

The rotation of the third rotation shaft 64 is transmitted to the output shaft 33 via the third pair of transmission gears 98, in the same manner as in the first speed and the second speed.

In this manner, in the third speed, rotation is transmitted from the input shaft 52 to the output shaft 33 via the second clutch 59, the fourth pair of shift gears 83, the first pair of transmission gears 84, the third clutch 70, the third pair of shift gears 91, and the third pair of transmission gears 98, as shown in FIG. 11.

### - Fourth speed -

In the third speed, when the rotation speed of the crank shaft 34 (i.e., the input shaft 52) further increases and the vehicle speed further increases as well, the valve 143 is driven and the fourth clutch 66 is engaged, as shown in FIG. 12. On the other hand, the third clutch 70 is disengaged. As a result, the second pair of shift gears 90 starts to rotate. Note that the gear ratio of the second pair of shift gears 90 is also smaller than the gear ratio of the second pair of transmission gears 85. Therefore, the rotation speed of the fourth gear 76 of the second pair of shift gears 90 becomes higher than the rotation speed of the eighth gear 78 of the second pair of transmission gears 85. Thus, the rotation of the second rotation shaft 54 is transmitted to the third rotation shaft 64 via the second pair of shift gears 90. On the other hand, the rotation of the third rotation shaft 64 is not transmitted to the second rotation shaft 54 by the one-way rotation transmission mechanism 93.

The rotation of the third rotation shaft 64 is transmitted to the output shaft 33 via the third pair of transmission gears 98, in the same manner as in the first speed to the third speed.

Likewise, in the fourth speed, as shown in FIG. 12, a rotation is transmitted from the input shaft 52 to the output shaft 33 via the second clutch 59, the fourth pair of shift gears 83, the first pair of transmission gears 84, the fourth clutch 66, the second pair of shift gears 90, and the third pair of transmission gears 98.

As described above, in this embodiment, like the first embodiment, the third and fourth clutches 70 and 66 provided in the second rotation shaft 54 are respectively provided with the minute leak holes communicating with the working chambers 137 and 133. Accordingly, it is possible to efficiently supply the oil to the output shaft 33 or the third rotation shaft 64.

Additionally, in this embodiment, as shown in FIG. 15, the axis C4 of the third rotation shaft 64 is located at a position lower than the axis C3 of the second rotation shaft 54. The axis C4 of the third rotation shaft 64 corresponds to the axis of the second intermediate shaft. The axis C3 of the second rotation shaft 54 corresponds to the axis of the first intermediate shaft. For this reason, it is possible to more efficiently supply the oil sprayed from the third and fourth clutches 70 and 66 provided in the second rotation shaft 54 to the third rotation shaft 64.

As described above, the third clutch 70 and the fourth clutch 66 in the first and second embodiments are hydraulic clutches. Accordingly, clutch engagement/disengagement for the third clutch 70 and the fourth clutch 66 is comparatively fast. In other words, when the clutch is engaged/disengaged, the third clutch 70 and the fourth clutch 66 do not continue to slide over a comparatively long period of time. For that reason, the energy loss of the third clutch 70 and the fourth clutch 66 is relatively small. It is therefore possible to improve the fuel efficiency of the scooter type vehicle 1.

From the point of view of improving the fuel efficiency of the scooter type vehicle 1, it is desirable for the first clutch 55 and the second clutch 59 to be hydraulic clutches in addition to the third clutch 70 and the fourth clutch 66. However, the engagement/disengagement of hydraulic clutches is comparatively fast. For that reason, if the first clutch 55 is a hydraulic clutch, the first clutch 55 engages suddenly when starting from standstill. It is therefore difficult to start smoothly from standstill. It is therefore not possible to achieve both a smooth start from standstill and improved fuel efficiency.

In this respect, in the first and second embodiments, the first clutch 55 provided for the first pair of shift gears 86 in the first speed is a centrifugal clutch. Centrifugal clutches engage/disengage more slowly in comparison to hydraulic clutches. For that reason, the vehicle can make a smooth start from standstill. Namely, as well as adopting a centrifugal clutch as the first clutch 55 provided for the first pair of shift gears 86 in the first speed, by adopting an hydraulic clutch for at least one other clutch for a pair of shift gears in a higher speed than first speed, fuel efficiency can be improved and a smooth start from standstill can also be achieved. In particular, from the point of view of achieving a smooth vehicle start from standstill and smooth acceleration, it is desirable for the second clutch 59 to also be a centrifugal clutch.

Even if the first clutch 55 and the second clutch 59 in the first and second embodiments are centrifugal clutches, they do not continue to slide over a significantly long period of time. Also, the frequency of running in first and second speed is relatively low. In other words, the amount of running time occupied by the first and second speeds over the total running time is relatively small. Therefore, even if the first clutch 55 and the second clutch 59 are centrifugal clutches, there is no significant deterioration in fuel efficiency.

However, if priority is placed on improved fuel efficiency in preference to smooth acceleration, the first clutch 55 only may be a centrifugal clutch and the other clutches may be hydraulic clutches.

In other words, further improvements to fuel efficiency can be achieved by using two or more hydraulic clutches, as in the above-described first and second embodiments.

In the above-described first and second embodiments, as the first clutch 55 is a centrifugal clutch, the manner of engagement of the first clutch 55 changes appropriately in accordance with the control input of the throttle controller, the degree of acceleration of the vehicle and so on. For that reason, by adopting a centrifugal clutch as the first clutch 55, driving that reflects the intentions of the rider can be achieved.

For example, if the rider needs to start from standstill with a relatively large degree of acceleration, and operates the throttle controller a large amount, the first clutch 55 engages relatively quickly, and starts from standstill with a relatively large degree of acceleration. On the other hand, if the rider needs to start from standstill smoothly with a relatively small degree of acceleration and operates the throttle controller a small amount, the first clutch 55 engages relatively slowly and performs a smooth start from standstill with a relatively low degree of acceleration. High drivability is therefore achieved.

The engagement/disengagement timing of the centrifugal clutch is decided by the engine rotation speed, while the engagement/disengagement timing of the hydraulic clutch can be freely controlled by control by the ECU 138. In other words, the freedom of control of the transmission 31 is raised by using two or more hydraulic clutches. Specifically, clutch engagement/disengagement control can be finely adjusted depending on the running status and the rider's operations. More specifically, the engagement/disengagement of the clutch can be finely controlled based on at least one of the degree of opening of the throttle and the vehicle speed.

For example, when a plurality of hydraulic clutches are used, as in the above-described first and second embodiments, it is desirable for the plurality of hydraulic clutches to be disposed on the same rotation shaft. Specifically, in the cases of the first and second embodiments described above, it is desirable for the third clutch 70 and the fourth clutch 66 that are hydraulic clutches to be disposed on the same second rotation shaft 54. By disposing them in this way, a hydraulic clutch oil feed path can be made relatively simple. Therefore, the structure of the transmission 31 can be further simplified.

It is also possible to reduce the number of rotation shafts that form the internal oil feed path. The manufacture of the transmission is therefore simplified, and manufacturing costs can also be reduced.

From the point of view of simplifying the structure of the transmission 31 in particular, it is desirable for the rotation shaft on which the hydraulic clutches are disposed to be separate from the rotation shaft on which the centrifugal clutches are disposed, as in the first and second embodiments described above. Specifically, it is desirable for the first clutch 55 and the second clutch 59 that are centrifugal clutches to be disposed on the input shaft 52 and for the third clutch 70 and the fourth clutch 66 that are hydraulic clutches to be disposed on the second rotation shaft 54, as in the above-described first and second embodiments.

### <<First modified example>>

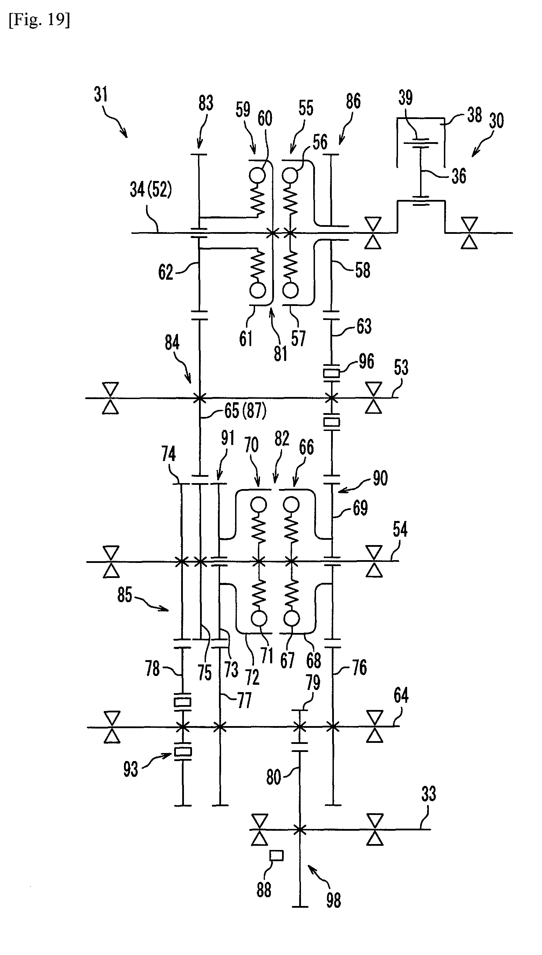

In the above-described embodiments, an example is explained in which the outer 57 of the first clutch 55 and the outer 61 of the second clutch 59 are formed by the same member. However, the invention is not limited to this structure. For example, as shown in FIG. 19, the outer 57 of the first clutch 55 and the outer 61 of the second clutch 59 may be provided separately.

### <<Second modified example>>

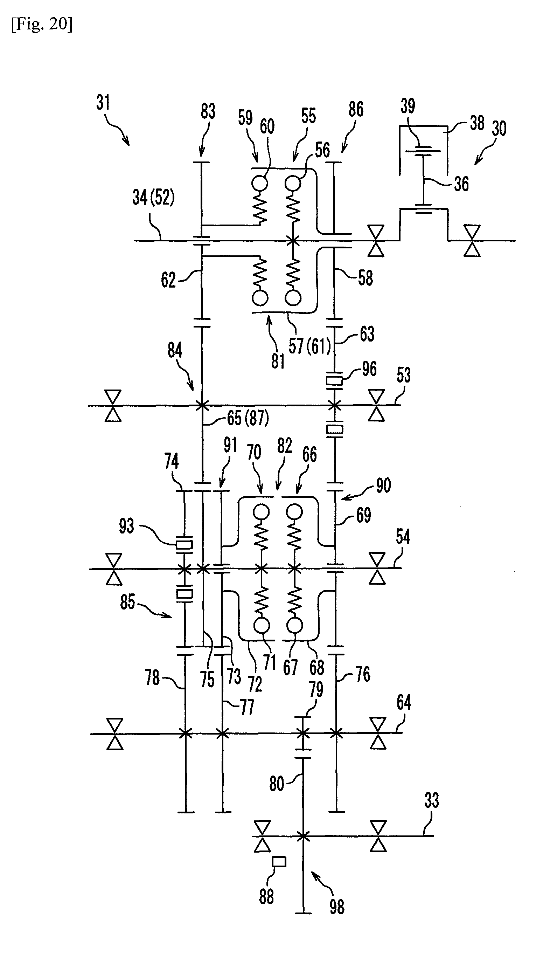

In the above-described embodiments, an example is explained in which the one-way rotation transmission mechanism 93 is provided for the eighth gear 78. However, the invention is not limited to this structure. For example, as shown in FIG. 20, the one-way rotation transmission mechanism 93 may be provided for the seventh gear 74.

### <<Third modified example>>

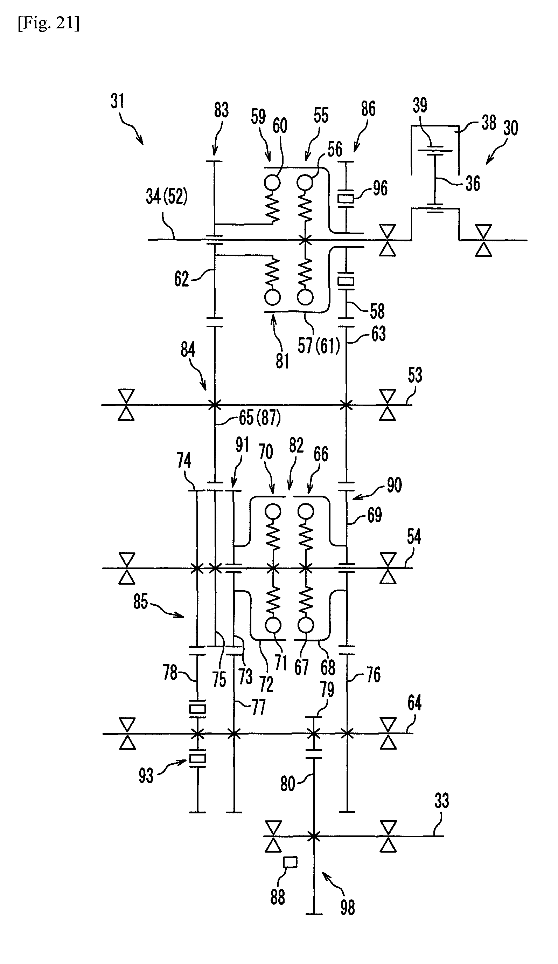

In the above-described embodiments, an example is explained in which the one-way rotation transmission mechanism 96 is provided for the second gear 63. However, the invention is not limited to this structure. For example, as shown in FIG. 21, the one-way rotation transmission mechanism 96 may be provided for the first gear 58.

### <<Fourth modified example>>

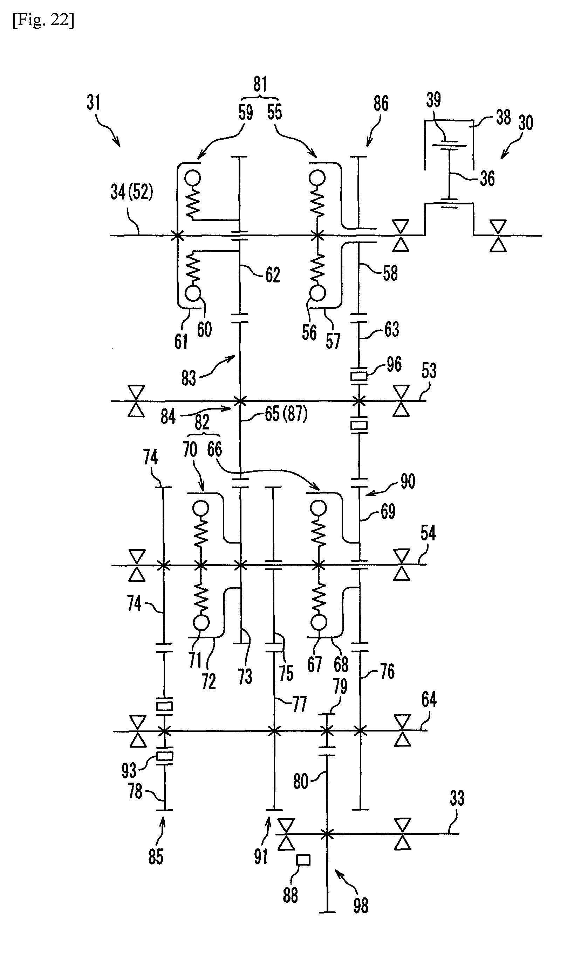

In the above-described embodiments, an example is explained in which the first clutch 55 and the second clutch 59 are disposed between the first pair of shift gears 86 and the fourth pair of shift gears 83. However, the invention is not limited to this structure. For example, as shown in FIG. 22, the first clutch 55 may be disposed on the left side of the first pair of shift gears 86, and the second clutch 59 may be disposed on the left side of the fourth pair of shift gears 83.

In a similar manner, in the above-described embodiments, an example is explained in which the third clutch 70 and the fourth clutch 66 are disposed between the third pair of shift gears 91 and the second pair of shift gears 90. However, the invention is not limited to this structure. For example, as shown in FIG. 22, the third clutch 70 may be disposed on the left side of the third pair of shift gears 91, and the fourth clutch 66 may be disposed on the left side of the second pair of shift gears 90.

Also in the case shown in FIG. 22, the input shaft 52, the first rotation shaft 53, the second rotation shaft 54, the third rotation shaft 64, and the output shaft 33 are arranged in the front-rear direction. Accordingly, the transmission 31 having a relatively narrow width can be realized.

### <<Fifth modified example>>

In the above-described embodiments, the four speed automatic transmission 31 is described as an example of the preferred embodiment of the invention. However, the invention is not limited to this example. For example, the transmission 31 may have 5 or more speeds. In this case, it is conceivable to include an additional two rotation shafts between the third rotation shaft 64 and the output shaft 33, and locate additional clutches and additional pairs of shift gears on the two added rotation shafts.

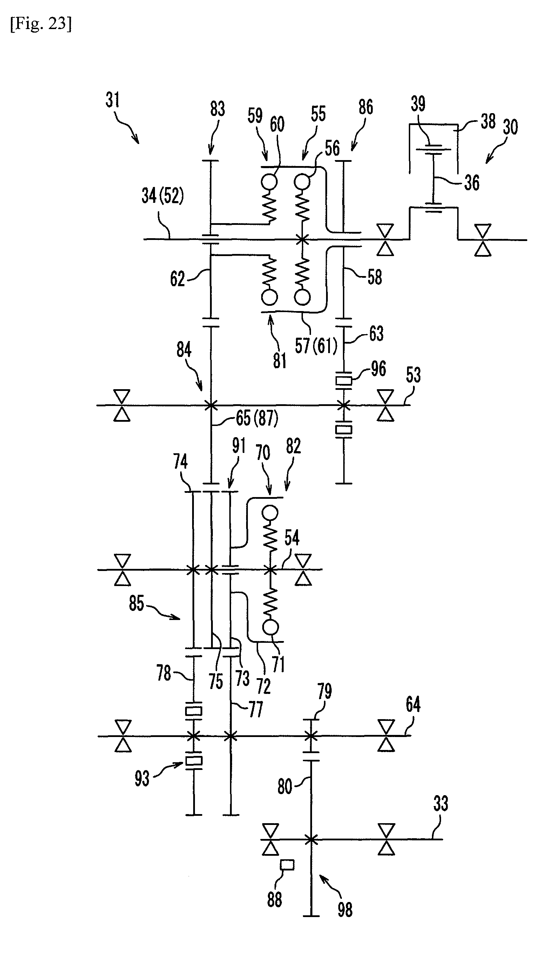

Also, for example, the transmission 31 may be a three speed transmission, as shown in FIG. 23. Specifically, when adopting a three speed transmission, it is conceivable to adopt the transmission 31 structure shown in FIG. 4 without the fourth clutch 66 and the second pair of shift gears 90, as shown in FIG. 23.

### <<Sixth modified example>>

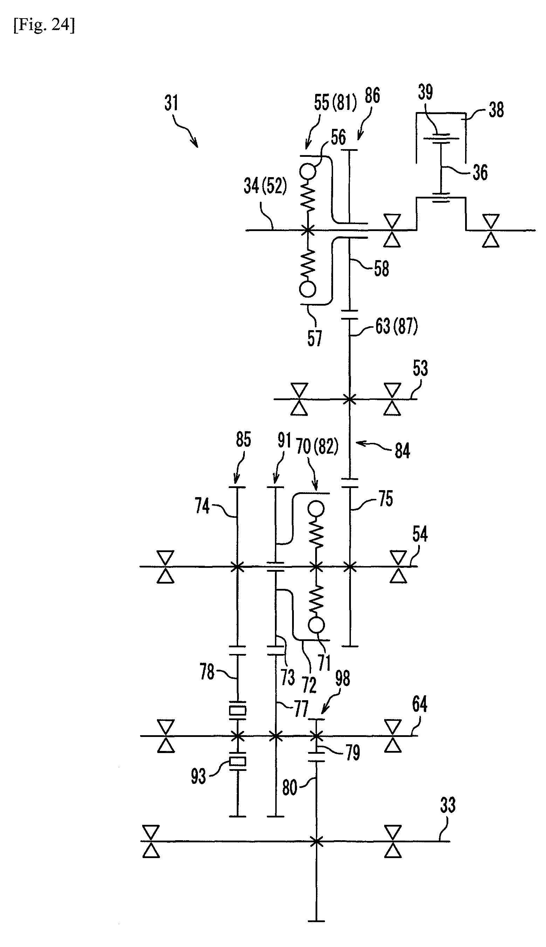

Also, for example, the transmission 31 may be a two speed transmission, as shown in FIG. 24. Specifically, when adopting a two speed transmission, it is conceivable to adopt the transmission 31 structure shown in FIG. 4 without the second clutch 59, the fourth pair of shift gears 83, the one-way rotation transmission mechanism 96, the fourth clutch 66 and the second pair of shift gears 90, as shown in FIG. 23.

### <<Other modified examples>>

In the above-described embodiments, an example is explained in which the engine 30 is a single cylinder engine. However, in the invention, the engine 30 is not limited to a single cylinder engine. The engine 30 may be, for example, a multi-cylinder engine such as a two cylinder engine.

In the above-described embodiments, an example is explained in which the output shaft 33 and the third rotation shaft 64 are separately provided. However, the invention is not limited to this structure. The output shaft 33 and the third rotation shaft 64 may be common. In other words, the rear wheel 18 may be attached to the third rotation shaft 64.

In the first and second embodiments and the modified examples described above, an example is explained in which the pairs of gears mesh directly with each other. However, the invention is not limited to this structure. The pairs of gears may mesh indirectly via separately provided gears.

In the above-described second embodiment, as shown in FIG. 15, an example is described in which the axis C2 of the first rotation shaft 53 is located at a position that is relatively further upward in relation to the axis C4 of the third rotation shaft 64. However, the invention is not limited to this structure. For example, the axis C2 of the first rotation shaft 53 may be located at a position that is relatively downward in relation to the axis C4 of the third rotation shaft 64. Specifically, the first rotation shaft 53 may be located such that the axis C2 of the first rotation shaft 53 is located on the lower side of the plane P. The third rotation shaft 64 may be located such that the axis C4 of the third rotation shaft 64 is located on the upper side of the plane P.

### <<Definition of terms in the specification>>

In the specification, the "motorcycle" is not limited to a motorcycle defined in a narrow sense. The term "motorcycle" indicates a motorcycle defined in a broad sense. More specifically, in the specification, the term "motorcycle" indicates any vehicle that changes direction by banking the vehicle. At least one of the front wheel and the rear wheel may include a plurality of wheels. More specifically, the "motorcycle" may be a vehicle in which at least one of the front wheel and the rear wheel includes two wheels that are arranged adjacent to each other. Examples of the "motorcycle" include, at least, a motorcycle defined in a narrow sense, a scooter type vehicle, a moped type vehicle, and an off-road vehicle.

"The centrifugal clutch" corresponds to a clutch which includes an input-side clutch member and an output-side clutch member so that the input-side clutch member engages with the output-side clutch member when the rpm of the input-side clutch member is not less than a predetermined rpm and the input-side clutch member disengages from the output-side clutch member when the rpm of the input-side clutch member is less than the predetermined rpm.

### <<Third Embodiment>>

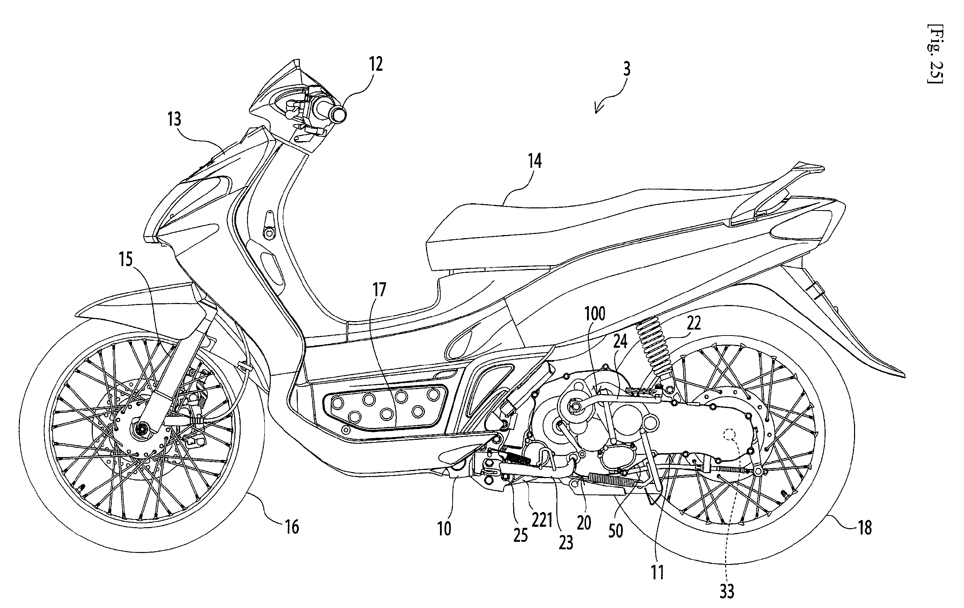

FIG. 25 is a left side view of the motorcycle 3 according to the third embodiment. In this embodiment, a motorcycle 3 will be described in detail. Additionally, in this embodiment, the same reference numerals are given to the members substantially having the same functions as those of the first and second embodiment, and the description thereof will be omitted.

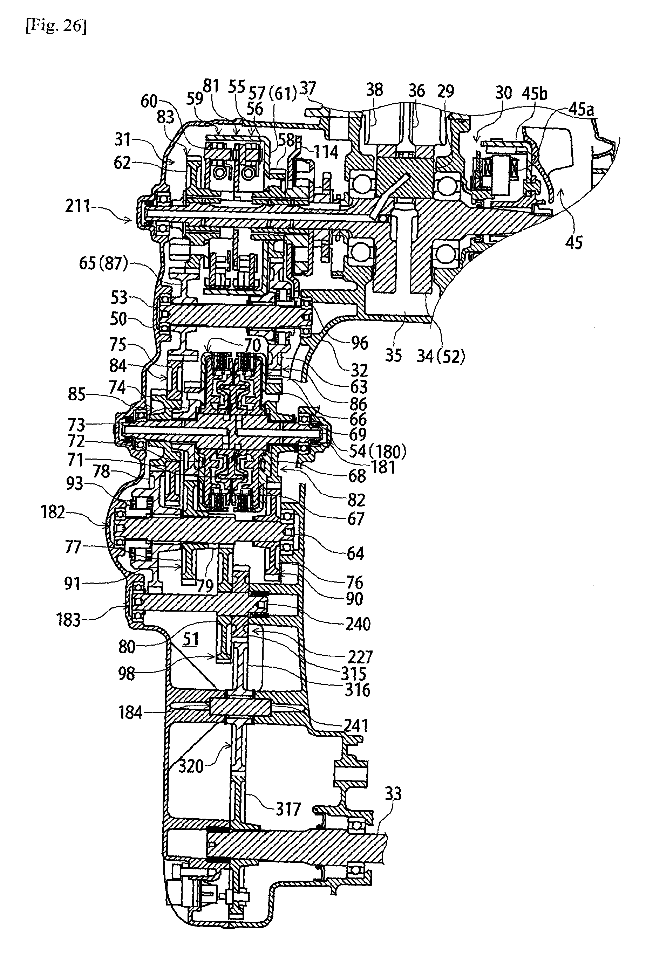

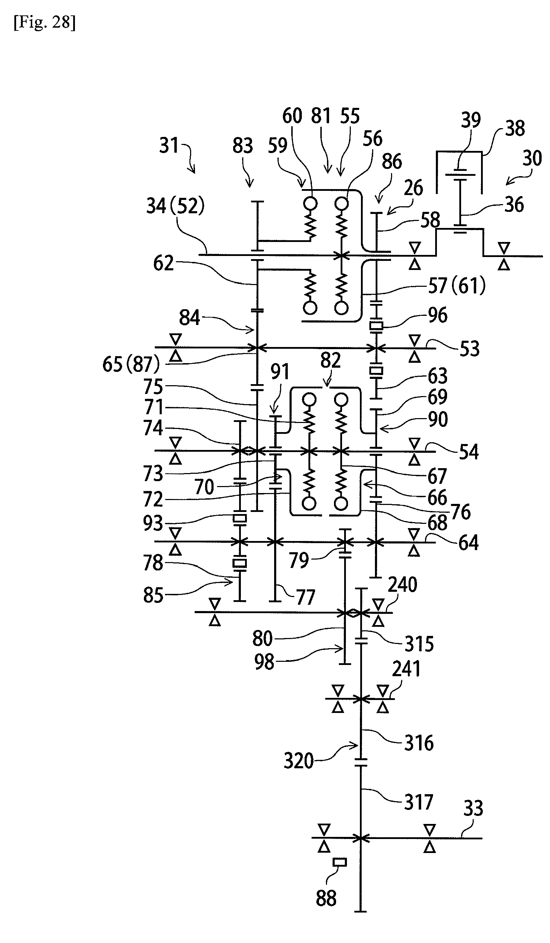

As shown in FIGS. 26 and 28, in the third embodiment, a fourth rotation shaft 240 and a fifth rotation shaft 241 are arranged between the third rotation shaft 64 and the output shaft 33. The fourteenth gear 80 is unrotatably attached to a fourth rotation shaft 240.

Additionally, a fifteenth gear 315 is unrotatably attached to the fourth rotation shaft 240. The fifteenth gear 315 meshes with a seventeenth gear 317 unrotatably attached to the output shaft 33 via a sixteenth gear 316 unrotatably attached to a fifth rotation shaft 241. The fifteenth gear 315, the sixteenth gear 316, and the seventeenth gear 317 form a fourth pair of transmission gears 320. A rotation of the fourth rotation shaft 240 is transmitted to the output shaft 33 via the fourth pair of transmission gears 320.

In this embodiment, as shown in FIG. 26, the second rotation shaft 54 forms a shaft body 180 of the first intermediate shaft. The second rotation shaft 54, the third clutch 70, the fourth clutch 66, the third gear 69, the fifth gear 73, the tenth gear 75, and the seventh gear 74 form a first intermediate shaft 181.

Additionally, in this embodiment, three second intermediate shafts are provided. A first second intermediate shaft 182 is formed by the third rotation shaft 64, the fourth gear 76, the thirteenth gear 79, the sixth gear 77, and the eighth gear 78. A second second intermediate shaft 183 is formed by the fourth rotation shaft 240, the fourteenth gear 80, and the fifteenth gear 315. A third second intermediate shaft 184 is formed by the fifth rotation shaft 241 and the sixteenth gear 316.

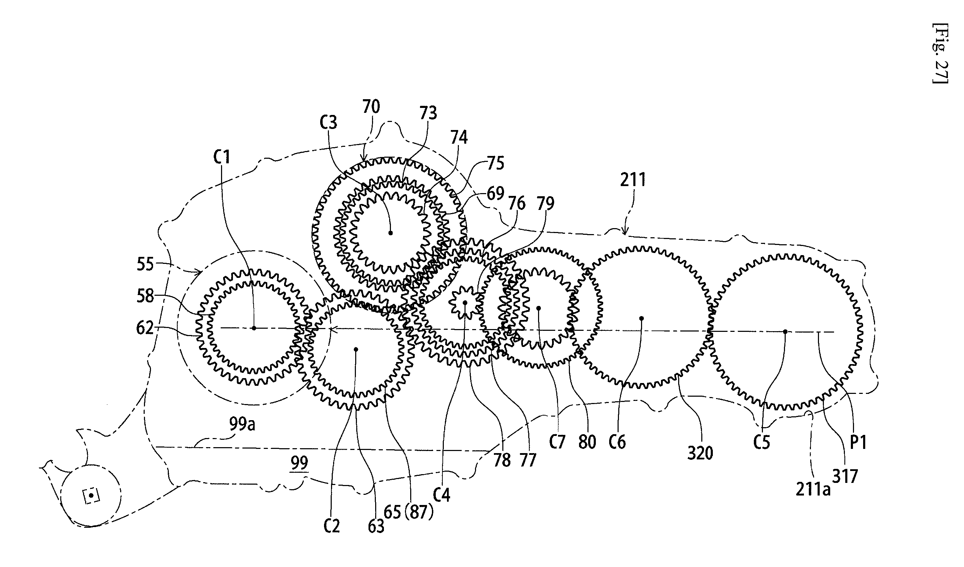

As shown in FIG. 27, the axis C2 of the first rotation shaft 53 is located in rear of the axis C1 of the input shaft 52. Additionally, the axis C2 of the first rotation shaft 53 is located below the axis C1 of the input shaft 52. The axis C2 of the first rotation shaft 53 is located slightly lower than a plane P including the axis C1 of the input shaft 52 and the axis C5 of the output shaft 33.

The axis of the first intermediate shaft 181 is the same as the axis C3 of the second rotation shaft 54. The axis C3 of the second rotation shaft 54 is located in rear of the axis C1 of the input shaft 52 and the axis C2 of the first rotation shaft 53. The axis C3 of the second rotation shaft 54 is located above the axis C 1 of the input shaft 52 and the axis C2 of the first rotation shaft 53. The axis C3 of the second rotation shaft 54 is located above the plane P.

The axis of the second intermediate shaft 182 is the same as the axis C4 of the third rotation shaft 64. The axis C4 of the third rotation shaft 64 is located in rear of the axis C 1 of the input shaft 52, the axis C2 of the first rotation shaft 53, and the axis C3 of the second rotation shaft 54. The axis C4 of the third rotation shaft 64 is located slightly above the axis C1 of the input shaft 52 and the axis C2 of the first rotation shaft 53. The axis C4 of the third rotation shaft 64 is located below the axis C3 of the second rotation shaft 54. The axis C4 of the third rotation shaft 64 is located above the plane P.

The axis of the third intermediate shaft 183 is the same as an axis C7 of the fourth rotation shaft 240. The axis C7 of the fourth rotation shaft 240 is located in rear of the axis C1 of the input shaft 52, the axis C2 of the first rotation shaft 53, the axis C3 of the second rotation shaft 54, and the axis C4 of the third rotation shaft 64. The axis C7 of the fourth rotation shaft 240 is slightly above the axis C 1 of the input shaft 52 and the axis C2 of the first rotation shaft 53. The axis C7 of the fourth rotation shaft 240 is located below the axis C3 of the second rotation shaft 54. The axis C7 of the fourth rotation shaft 240 is substantially located at the same height as that of the axis C4 of the third rotation shaft 64. The axis C7 of the fourth rotation shaft 240 is located above the plane P.

The axis of the fourth intermediate shaft 184 is the same as the axis C6 of the fifth rotation shaft 241. The axis C6 of the fifth rotation shaft 241 is located in rear of the axis C1 of the input shaft 52, the axis C2 of the first rotation shaft 53, the axis C3 of the second rotation shaft 54, the axis C4 of the third rotation shaft 64, and the axis C7 of the fourth rotation shaft 240. The axis C6 of the fifth rotation shaft 241 is located slightly above the axis C1 of the input shaft 52 and the axis C2 of the first rotation shaft 53. The axis C6 of the fifth rotation shaft 241 is located below the axis C3 of the second rotation shaft 54, the axis C4 of the third rotation shaft 64, and the axis C7 of the fourth rotation shaft 240. The axis C6 of the fifth rotation shaft 241 is located above the plane P.

The oil reservoir 99 is formed below the input shaft 52, the first rotation shaft 53, the third rotation shaft 64, and the fourth rotation shaft 240. In this embodiment, the oil reservoir 99 is formed at a position in front of the axis C7 of the fourth rotation shaft 240. The oil reservoir 99 is not formed at a position below the axis C7 of the fourth rotation shaft 240 and the axis C6 of the fifth rotation shaft 241.

The first and second rotation shafts 53 and 54 are located at a position higher than the oil reservoir 99 when the motorcycle 3 is in a stop state. Additionally, in this embodiment, the gears 63, 65, 69, 73, 75, and 74 provided in the first and second rotation shafts 53 and 54 are located at a position higher than the oil reservoir 99 when the motorcycle 3 is in a stop state.

A casing 211 formed by the crank case 32, the transmission cover 50, and the generator cover is provided with a concave portion 211 a which is located below the output shaft 33 and is recessed downward.

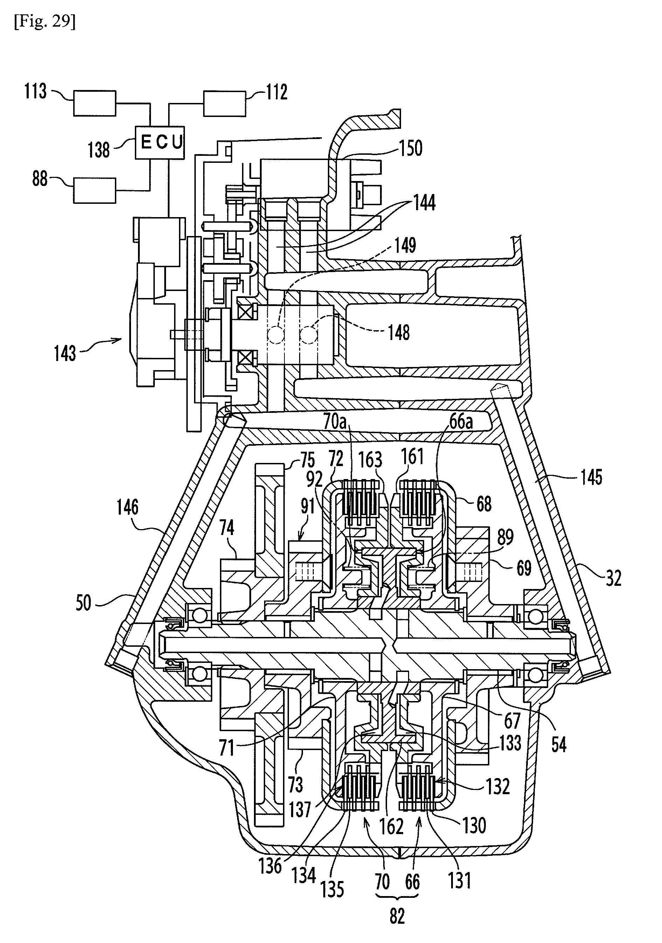

As described above, even in the third embodiment, as shown in FIG. 29, the third and fourth clutches 70 and 66 provided in the second rotation shaft 54 are provided with minute leak holes 70a and 66a communicating with the working chambers 137 and 133, respectively. For this reason, when the third and fourth clutches 70 and 66 rotate in an engagement state, the oil within the working chambers 137 and 133 is sprayed via the leak holes 70a and 66a. Accordingly, it is possible to efficiently supply the oil to the third rotation shaft 64, the fourth rotation shaft 240, the fifth rotation shaft 241, and the output shaft 33. For this reason, like this embodiment, for example, even when the oil reservoir 99 is formed only at a position in front of the axis C7 of the fourth rotation shaft 240, it is possible to efficiently realize lubrication of the fourth rotation shaft 240, the fifth rotation shaft 241, and the output shaft 33. In other words, since it is possible to form the oil reservoir 99 only at a position in front of the casing 211, it is possible to reduce an amount of the oil collected in the oil reservoir 99. That is, it is possible to reduce an amount of the required oil. Additionally, for example, it is possible to make short a longitudinal length of the oil reservoir 99. Accordingly, it is possible to allow the oil reservoir 99 to have a large depth. As a result, it is possible to prevent air from being sucked into the oil pump.

Additionally, since the oil is efficiently supplied to the output shaft 33 or the fourth and fifth rotation shafts 240 and 241, it is not necessary to additionally provide an oil path in the output shaft 33 or the fourth and fifth rotation shafts 240 and 241. Accordingly, it is possible to simplify the configuration of the transmission 31. Additionally, it is possible to decrease the weight and size of the transmission 31.

In this embodiment, as shown in FIG. 27, the axis C3 of the second rotation shaft 54 is disposed above the plane P1 including the axis C 1 of the input shaft 52 and the axis C5 of the output shaft 33. Particularly, the axis C3 of the second rotation shaft 54 is located at a position higher than all of the axes C1, C2, C4, C5, C6, and C7 of the other rotation shafts 52, 53, 54, 64, 240, 241, and 33. Accordingly, the oil flying from the leak holes 70a and 66a is easily supplied to the rotation shafts 52, 53, 54, 64, 240, 241, and 33. Accordingly, it is possible to more efficiently supply the oil to the third rotation shaft 64, the fourth rotation shaft 240, the fifth rotation shaft 241, and the output shaft 33.

In this embodiment, when the motorcycle 3 is horizontally in a stop state, all of the input shaft 52, the first rotation shaft 53, the second rotation shaft 54, the third rotation shaft 64, the fourth rotation shaft 240, and the fifth rotation shaft 241 are located at a position higher than an oil surface 99a of the oil reservoir 99. For this reason, the oil within the oil reservoir 99 is not stirred by the input shaft 52, the first rotation shaft 53, the second rotation shaft 54, the third rotation shaft 64, the fourth rotation shaft 240, and the fifth rotation shaft 241. Accordingly, it is possible to prevent air from being sucked into the oil pump. Additionally, it is possible to reduce a rotation energy loss of the input shaft 52, the first rotation shaft 53, the second rotation shaft 54, the third rotation shaft 64, the fourth rotation shaft 240, and the fifth rotation shaft 241.

Particularly, in this embodiment, the gears 58, 62, 63, 65, 69, 73, 75, 74, 76, 79, 77, 78, 315, 80, 316, and 317 are located at a position higher than the oil surface 99a of the oil reservoir 99. Accordingly, it is possible to more efficiently prevent air from being sucked into the oil pump. Additionally, it is possible to more reduce a rotation energy loss of the input shaft 52, the first rotation shaft 53, the second rotation shaft 54, the third rotation shaft 64, the fourth rotation shaft 240, and the fifth rotation shaft 241.

In the third embodiment, the oil is sprayed from the leak holes 70a and 66a provided in the third and fourth clutches 70 and 66. For this reason, like the first and second embodiments, it is possible to more efficiently supply the oil to the third rotation shaft 64. Additionally, when the rpm of the rotation shaft is fast and a large amount of oil is required for the rotation shaft, it is possible to efficiently supply the oil.

As shown in FIG. 27, in this embodiment, the casing 211 is provided with the concave portion 211a located below the output shaft 33. For this reason, a part of oil may be collected in the concave portion 211 a. Accordingly, even when the third and fourth clutches 70 and 66 are disengaged, the oil collected in the concave portion 211 a may be supplied to the output shaft 33 or the fourth and fifth rotation shafts 240 and 241.

Additionally, in this embodiment, an example of the vehicle includes a straddle-type vehicle, a four-wheel vehicle, and the like. An example of the four-wheel vehicle includes an off-road vehicle and the like. An example of the straddle-type vehicle includes a motorcycle, ATV (All Terrain Vehicle), and the like.

## Claims

1. A stepped automatic transmission comprising:
an input shaft;
an output shaft which is disposed in rear of the input shaft;
first and second intermediate shafts which are disposed on a power transmission path between the input shaft and the output shaft;
a casing which accommodates the input shaft, the output shaft, the first intermediate shaft, and the second intermediate shaft and in which an oil reservoir is formed in a bottom portion; and
an oil supply mechanism which supplies oil collected in the oil reservoir to the first intermediate shaft,
wherein the first intermediate shaft is provided with an oil chamber to which the oil is supplied and one or a plurality of through-holes connected to the oil chamber.

2. The stepped automatic transmission according to Claim 1, wherein the oil reservoir is located in front of an axis of the second intermediate shaft.

3. The stepped automatic transmission according to Claim 1, wherein an axis of the first intermediate shaft is located above a plane including an axis of the input shaft and an axis of the output shaft.

4. The stepped automatic transmission according to Claim 1, wherein an axis of the second intermediate shaft is located below an axis of the first intermediate shaft.

5. The stepped automatic transmission according to Claim 1, wherein the first and second intermediate shafts are located at a position higher than an oil surface of the oil reservoir.

6. The stepped automatic transmission according to Claim 1, wherein the first intermediate shaft includes a shaft body and a clutch which is attached to the shaft body and has a working chamber as the oil chamber to which the oil is supplied.

7. The stepped automatic transmission according to Claim 6, wherein the through-holes are formed in the clutch so as to be opened to the working chamber.

8. The stepped automatic transmission according to Claim 7, wherein the through-holes are leak holes which allow the oil within the working chamber to leak to the outside of the working chamber.

9. The stepped automatic transmission according to Claim 1, wherein the casing has a concave portion formed therein so as to be located below the output shaft and to be recessed downward.

10. The stepped automatic transmission according to Claim 1, wherein the second intermediate shaft is disposed closer to the output shaft than the first intermediate shaft.

11. A power unit comprising the stepped automatic transmission according to Claim 1.

12. A vehicle comprising the power unit according to Claim 11.
